# EUROPEAN PATENT SPECIFICATION

(11) **EP 3 799 464 B1**
(45) Date of publication and mention of the grant of the patent: **22.04.2026**
(21) Application number: 18921722.7
(22) Date of filing: 04.06.2018
(51) Int. Cl.: H04W 24/02

(54) **CELL ESTABLISHMENT METHOD AND DEVICE**
ZELLEINRICHTUNGSVERFAHREN UND -VORRICHTUNG
PROCÉDÉ ET DISPOSITIF D'ÉTABLISSEMENT DE CELLULE

(43) Date of publication of application: 31.03.2021
(73) Proprietor: Huawei Technologies Co., Ltd., Longgang Shenzhen, Guangdong 518129 (CN)
(72) Inventor: YU, Yinghui, Shenzhen, Guangdong 518129 (CN)
(74) Representative: Gill Jennings & Every LLP
(86) International application number: PCT/CN2018/089843
(87) International publication number: WO 2019/232683

(56) References cited:
- EP-A1- 2 552 160
- EP-A1- 2 640 160
- WO-A1-2011/121399
- CN-A- 101 772 086
- CN-A- 102 790 971
- CN-A- 103 053 191
- CN-A- 103 796 208
- US-A1- 2012 315 913
- US-A1- 2014 364 124
- US-A1- 2018 102 817

## Description

### TECHNICAL FIELD

This application relates to the communications field, and more specifically, to a cell establishment method and apparatus.

### BACKGROUND

With rapid development of wireless communication, people are no longer satisfied with only human-to-human communication. Internet of things (internet of thing, IoT) technologies emerge, and a market demand of the technologies increase rapidly. IoT devices are usually small and battery-powered systems, for example, an intelligent meter reading system that needs to periodically monitor and report use statuses of water, electricity, gas, and the like. These devices are usually deployed in places with poor radio signal coverage, for example, a basement or a wall. Therefore, coverage enhancement is used as a basic design requirement when an IoT communications system is designed, and 20-dB coverage enhancement is required in a case of a single hop on an air interface. The 20-dB coverage enhancement can meet coverage requirements in most scenarios. However, in some scenarios, for example, in a multi-story distribution scenario such as a building, if a base station is located on the rooftop of the building, a terminal on a floor close to the base station can be served; however, a terminal on a floor far away from the base station may not be served.

To extend coverage of a cell and reduce power consumption of a terminal, a relay technology is introduced. The relay technology is to add one or more relay nodes between a base station and a terminal, and the relay node is responsible for forwarding a radio signal once or a plurality of times.

In the current technology, the relay node exists as an independent cell. Therefore, the relay node needs to exchange configuration and management information of the cell with operation, administration and maintenance (operation administration and maintenance, OAM). This may make management of OAM more complex, and may also cause bandwidth consumption brought by transmission performed by OAM.

US 2012/315913 A1 describes a method for selecting a donor cell. A relay node acquires the donor cell configuration information. An O&M system downloads the donor cell configuration information to the RN. If the relay node determines, based on the donor cell configuration information, that the currently serving cell is listed in the donor cell configuration information, the relay node continues to work in the cell. Otherwise, the relay node selects another cell listed in the donor cell configuration information to access.

Another example of the prior art can be found in EP2640160.

### SUMMARY

The invention is defined in the appended claims.

### BRIEF DESCRIPTION OF DRAWINGS

FIG. 1 is a schematic diagram of a system that is in a cell establishment method and is applicable to an embodiment of this application;
FIG. 2 is a schematic diagram of distribution of a base station and a terminal device in an IoT communications system;
FIG. 3 is a diagram of a two-hop relay network architecture;
FIG. 4 is an architectural diagram of a protocol stack of a relay node in an LTE system;
FIG. 5 is a diagram of a network architecture of a relay node that is in a cell establishment method and is applicable to an embodiment of this application;
FIG. 6 is an architectural diagram of a protocol stack of a relay node that is in a cell establishment method and is applicable to an embodiment of this application;
FIG. 7 is a schematic diagram of a cell establishment method applicable to an embodiment of this application;
FIG. 8 is a schematic diagram of a cell establishment method applicable to another embodiment of this application;
FIG. 9A and FIG. 9B are a schematic diagram of a cell establishment method applicable to still another embodiment of this application;
FIG. 10 is a schematic diagram of a cell establishment method applicable to yet another embodiment of this application;
FIG. 11 is a schematic diagram of a PDCP layer in a cell establishment method applicable to an embodiment of this application;
FIG. 12 is a schematic block diagram of a cell establishment apparatus according to an embodiment of this application;
FIG. 13 is a schematic structural diagram of a relay node according to an embodiment of this application; and
FIG. 14 is a schematic structural diagram of a base station according to an embodiment of this application.

### DESCRIPTION OF EMBODIMENTS

The following describes technical solutions of this application with reference to the accompanying drawings.

The technical solutions of the embodiments of this application may be applied to various communications systems, such as a global system for mobile communications (global system of mobile communication, GSM) system, a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunication system, UMTS), a worldwide interoperability for microwave access (worldwide interoperability for microwave access, WiMAX) communications system, a 5th generation (5th generation, 5G) system, or a new radio (new radio, NR) system.

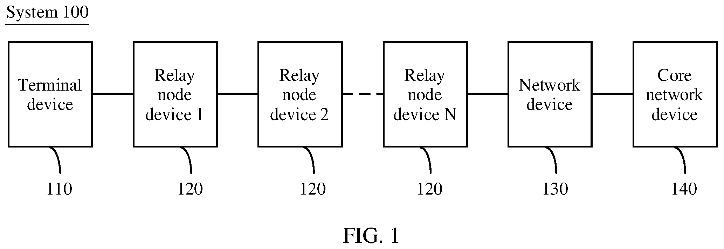

First, for ease of understanding of the embodiments of this application, a communications system shown in FIG. 1 is used as an example to describe in detail a communications system applicable to the embodiments of this application. FIG. 1 is a schematic diagram of a communications system that is in a cell establishment method and is applicable to an embodiment of this application. As shown in FIG. 1, the system 100 includes a terminal device 110, a relay node device 120, and a network device 130. The system 100 may include one or more relay node (relay node, RN) devices, for example, a relay node device 1, a relay node device 2, ..., and a relay node device N shown in FIG. 1. Optionally, the system 100 may further include a core network device 140.

The terminal device 110 may establish a communication connection to the network device 130 through the relay node device 120. The network device 130 may establish a communication connection to the terminal device 110 through the relay node device 120. The relay node device 120 may establish a communication connection with the network device 130, or may establish a communication connection with the terminal device 110. The core network device 140 may establish a communication connection to the terminal device 110 through the network device 130 and the relay node device 120.

It should be understood that the terminal device in the system 100 may be user equipment, an access terminal, a user unit, a user station, a mobile station, a mobile station, a remote station, a remote terminal, a mobile device, a user terminal, a terminal, a wireless communications device, a user agent, or a user apparatus. The terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future evolved public land mobile network (public land mobile network, PLMN), or the like. This is not limited in the embodiments of this application.

It should be further understood that the network device in the system 100 may be a device configured to communicate with the terminal device. The network device may be any device that has a wireless transceiver function or a chip that can be disposed in the device. The device includes but is not limited to an evolved NodeB (evolved Node B, eNB), a radio network controller (radio network controller, RNC), a NodeB (Node B, NB), a base station controller (base station controller, BSC), a base transceiver station (base transceiver station, BTS), a home base station (for example, a home evolved NodeB, or a home Node B, HNB), a baseband unit (base band Unit, BBU), an access point (access point, AP) in a wireless fidelity (wireless fidelity, WIFI) system, a wireless relay node, a wireless backhaul node, a transmission point (transmission point, TP), a transmission reception point (transmission and reception point, TRP), or the like, or may be a gNB in a 5G system such as NR, a transmission point (TRP, or TP), or one or a group (including a plurality of antenna panels) of antenna panels of a base station in a 5G system, or may be a network node that constitutes a gNB or a transmission point, for example, a baseband unit (BBU), or a distributed unit (distributed unit, DU).

In some deployments, the gNB may include a centralized unit (centralized unit, CU) and a DU. The gNB may further include a radio unit (radio unit, RU). The CU implements some functions of the gNB, and the DU implements some functions of the gNB. For example, the CU implements functions of a radio resource control (radio resource control, RRC) layer and a packet data convergence protocol (packet data convergence protocol, PDCP) layer, and the DU implements functions of a radio link control (radio link control, RLC) layer, a media access control (media access control, MAC) layer, and a physical (physical, PHY) layer. Information at the RRC layer is eventually converted into information at the PHY layer, or is converted from information at the PHY layer. Therefore, in this architecture, higher layer signaling, such as RRC layer signaling or PDCP layer signaling, may also be considered as being sent by the DU or sent by the DU and the RU. It may be understood that the network device may be a CU node, a DU node, or a device including a CU node and a DU node. In addition, the CU may be classified as a network device in an access network RAN, or the CU may be classified as a network device in a core network CN. This is not limited herein.

It should be further understood that the core network device in the system 100 may be a cellular internet of things serving gateway node (CIoT serving gateway node, C-SGN), a mobility management entity (mobility management entity, MME), a serving gateway (serving gateway, S-GW), a packet data network gateway (packet data network gateway, P-GW), a home subscriber server (home subscriber server, HSS), and the like.

Optionally, in the system 100 shown in FIG. 1, the network device 130 may be a serving network device, and the serving network device may be a network device for providing at least one of services of an RRC connection, non-access stratum (non-access stratum, NAS) mobility management, and a security input for the terminal device by using a wireless air interface protocol.

The relay node device 120 shown in FIG. 1 may be understood as one or more relay node devices added between a network device and a terminal device, and is responsible for forwarding a radio signal for one or more times. In other words, the radio signal needs to pass through a plurality of hops before reaching the terminal device. A relatively simple two-hop relay is used as an example. That is, a "network device to terminal device" link is divided into two links: a "network device to relay node device" link and a "relay node device to terminal device" link. In this way, there is an opportunity to replace a relatively poor-quality link with two relatively good-quality links, so that a higher link capacity and better coverage are obtained. This reduces power consumption of the terminal device.

Optionally, the relay node device 120 may be understood as a coordinated network device. The serving network device may send control signaling to the terminal device, and the coordinated network device may send data to the terminal device; the serving network device may send control signaling to the terminal device, and the serving network device and the coordinated network device may send data to the terminal device; or both the serving network device and the coordinated network device may send control signaling to the terminal device, and both the serving network device and the coordinated network device may send data to the terminal device. Alternatively, the coordinated network device may send control signaling to the terminal device, and at least one of the serving network device and the coordinated network device may send data to the terminal device, or the coordinated network device may send control signaling and data to the terminal device. This is not particularly limited in the embodiments of this application. Alternatively, optionally, in the system 100 shown in FIG. 1, the relay node device 120 may be understood as a special terminal device. The relay node device may send a connection establishment request message to the network device.

It should be understood that FIG. 1 shows an example of the terminal device 110, the relay node device 120, the network device 130, and the core network device 140 merely for ease of understanding. However, this should not constitute any limitation on this application. The system may further include more network devices, or may include more terminal devices, or may include more or fewer relay node devices. This is not limited in this application.

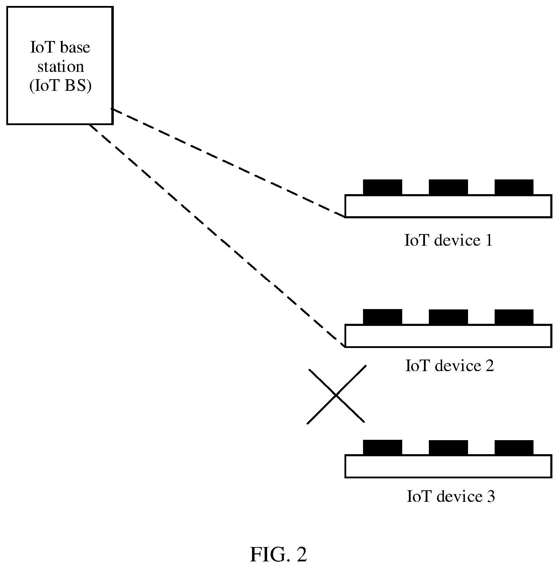

With rapid development of wireless communication, people are no longer satisfied with only human-to-human communication. Internet of things (internet of thing, IoT) technologies emerge. In an IoT communications system, 20-dB coverage enhancement can be achieved in a case of a single hop on an air interface. The 20-dB coverage enhancement can meet coverage requirements in most scenarios. However, in some special scenarios, for example, in a multi-story distribution scenario such as a building, as shown in FIG. 2, if a base station is located on the rooftop of the building, IoT terminal devices on a floor close to the base station, such as an IoT device 1 and an IoT device 2, can be served; however, a device on a floor far away from the base station, such as an IoT device 3, may not be served. Alternatively, there are further some scenarios. For example, some gas meters or the like are located relatively deep underground, and may not be reached by one hop. In addition, in these scenarios, deploying wired backhaul links is also difficult.

In addition, if a terminal is in deep coverage, more resources are required to receive and send data. In this case, the terminal needs to send and receive data for a longer time, resulting in more power consumption of the terminal. If a relay node is added between the base station and the terminal, a signal received by the terminal is stronger, and a coverage case is improved. Therefore, power consumption of the terminal for sending and receiving is reduced.

A relay technology is introduced to extend coverage of a cell and improve the power consumption of the terminal. As described above, in the relay technology, one or more relay nodes are added between the base station and the terminal device. The relay node provides a function and a service similar to those of a common base station for a terminal device that accesses a cell of the relay node. The relay node may alternatively be similar to a common terminal device, and access a base station that provides a service for the relay node. Usually, a base station that serves a relay node is referred to as a donor base station (donor eNB, DeNB). In the embodiments of this application, a network device connected to a relay node is used as a donor base station for description.

In the foregoing case, a small cell (small cell) may be used as a multi-hop relay to resolve the foregoing problem. Specifically, in one manner, a two-hop relay in the LTE standard is used. In an LTE network, based on user plane forwarding protocol stacks, there are four types of relay solutions, namely, an L0 relay solution, an L1 relay solution, an L2 relay solution, and an L3 relay solution. User planes of the L0 and L1 relays are only for amplification and forwarding. Therefore, a protocol stack is related to only a physical layer. The L2 relay needs to have control functions such as a scheduling control function, a hybrid automatic repeat request control function, and an automatic repeat request control function. Therefore, a protocol stack is related to a PHY layer and a MAC layer, and possibly the protocol stack is further related to an RLC layer and a PDCP layer. However, an RRC control function is performed by a base station to which the L2 relay belongs. The L3 relay has all functions of a base station, and performs backhaul link transmission by using an internet protocol (internet protocol, IP) between networks.

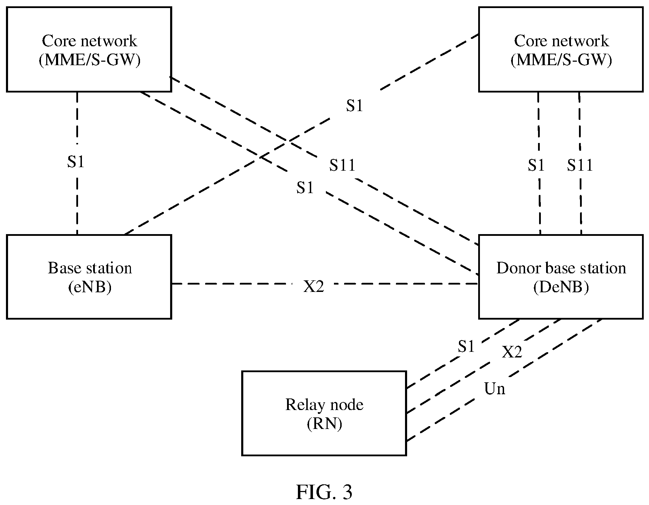

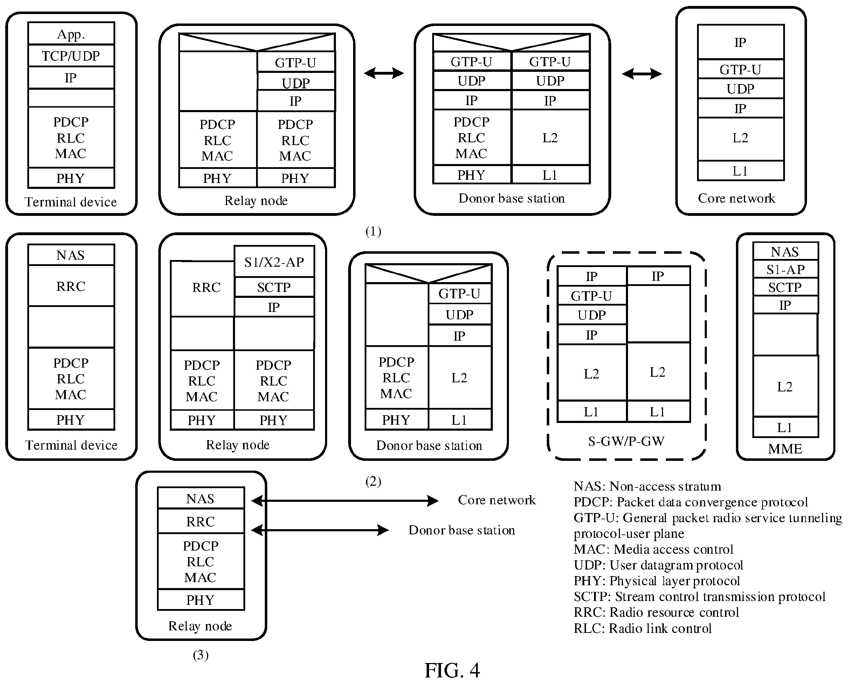

FIG. 3 shows a network architecture of a two-hop relay. It can be learned from FIG. 3 that, in a structure, a relay node is connected to a donor base station through a Un interface, and functions of an X2 interface and an S1 interface are supported on the Un air interface. Specifically, a protocol stack architecture of the relay node is shown in FIG. 4. FIG. 4(1) shows a user plane (user plane) protocol stack of the relay node. As shown in FIG. 4(1), an application layer of a terminal device generates a corresponding service flow or corresponding control information. After IP packetization, the service flow or control information is transmitted through the air interface. When the service flow or control information is transmitted through the L3 relay, on a Un interface oriented to the terminal device, the relay node supports an air interface protocol stack from a PDCP layer, an RLC layer, and a MAC layer to a PHY layer. On a backhaul link oriented to the donor base station, the relay node supports a general packet radio service tunneling protocol-user plane (general packet radio service tunnel protocol user plane, GTP-U), a user datagram protocol (user datagram protocol, UDP), and an IP protocol stack. Below an IP layer, the relay node supports transmission on the Un air interface from the PDCP layer, the RLC layer, and the MAC layer to the PHY layer. User-plane data on both the S1 interface and the X2 interface may be transmitted on a protocol stack of the GTP-U. FIG. 4(2) shows a control plane (control plane) protocol stack of the relay node. On a Uu air interface oriented to the terminal device, the relay node supports layers from an RRC layer, a PDCP layer, an RLC layer, and a MAC layer to a PHY layer. On a backhaul link oriented to the donor base station, a relay node supports an S 1-AP/X2-AP, a stream control transmission protocol (stream control transmission protocol, SCTP), and an IP protocol stack. Below an IP layer, the relay node supports transmission on a Un air interface from the PDCP layer, the RLC layer, and the MAC layer to the PHY layer. Control-plane data on the S1 interface and control-plane data on the X2 interface are respectively transmitted on the S1-AP and the X2-AP. In FIG. 4(3), when a relay node is started as a terminal device, the relay node is used as a terminal device node above an RRC layer protocol stack, and further supports a non-access stratum (non-access stratum, NAS) function.

It can be learned from FIG. 3 and FIG. 4 that, in the foregoing manners, the relay node has a function of a combination of functions of a base station and a terminal. The relay node in the foregoing manners may be used to implement a function of a multi-hop relay (relay). However, the multi-hop relay is based on an existing network function. Because the relay node further needs to undertake a function of a donor base station of a previous-hop node, a function of the relay node is more complex than a function of the foregoing two-hop relay in LTE, and needs to include functions of a terminal device, a base station, and a donor base station (for example, proxy (proxy) + HeNB gateway (gateway, GW)). In addition, costs are also high.

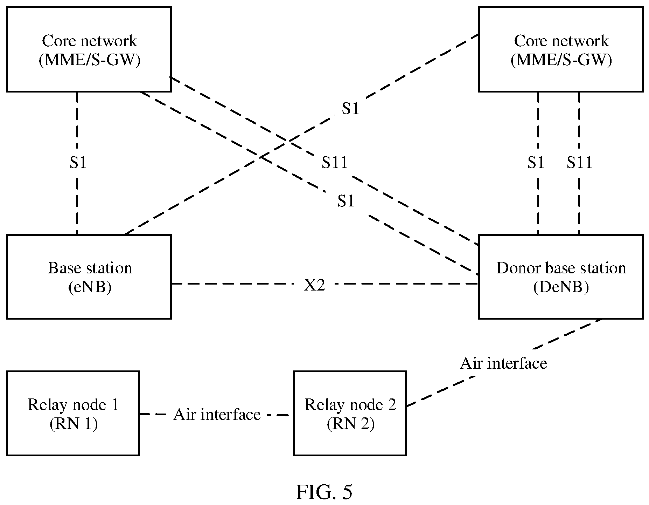

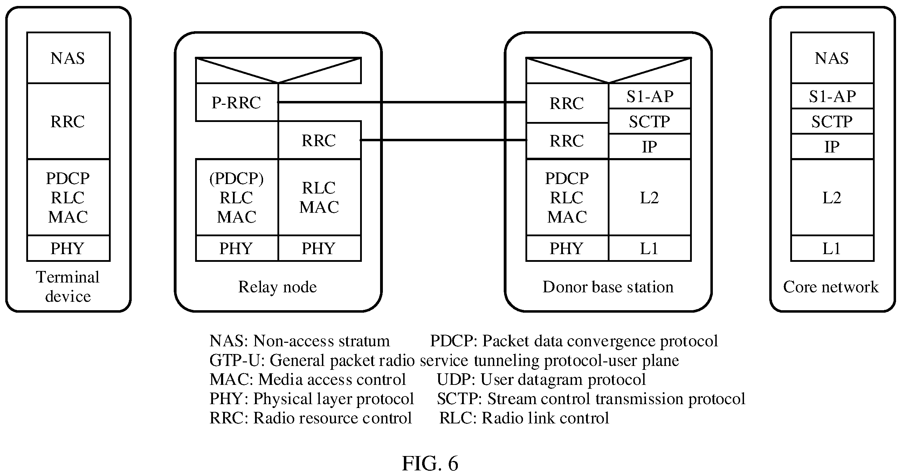

Based on the problem in the foregoing manners, this application provides a cell establishment method, and introduces a lightweight L3 relay. A network architecture of the L3 relay provided in this application is shown in FIG. 5. Only an L3 air interface connection is supported between relay nodes and between a relay node and a donor base station. However, X2 (that is, an interface protocol between base stations) and S1 (that is, an interface protocol between a base station and a core network) are not supported. This makes a function of the L3 relay simpler. In addition, the L3 relay may be compatible with access of an existing terminal device. To be specific, the terminal device does not need to be upgraded to support a newly introduced relay node. FIG. 6 shows a simplified protocol stack architecture of an L3 relay. In the protocol stack architecture, both a user plane transmission solution and a control plane transmission solution are supported. The relay node supports, on an air interface oriented to the terminal device, an RRC layer, an RLC layer, a MAC layer, and a PHY layer. Optionally, a PDCP layer may further exist. The RRC layer may be referred to as a proxy RRC layer, and is used to identify an RRC configuration message from a terminal and/or from a donor base station. The relay node and a cell of the donor base station share a same cell global identifier and a same physical cell identity. The relay node may further be understood as an extension of coverage of the cell of the donor base station, instead of an independent cell. Therefore, cell-specific configuration information or the like does not need to be obtained from operation, administration and maintenance (operation administration and maintenance, OAM), so that consumption of bandwidth resources of a backhaul link (backhaul, BH) can be avoided.

It should be understood that, in this embodiment of this application, "support only" means that the relay node performs communication only through an air interface. For example, the relay node may be a relay node that can support an X2 interface. However, only an air interface is used for communication during use.

On a backhaul link oriented to a previous-hop relay node and/or a donor base station, the relay node supports an RRC layer, an RLC layer, a MAC layer, and a PHY layer. Optionally, a PDCP layer may further exist. A function of the PDCP layer may not be required for a control plane transmission solution. A function of the relay node is equivalent to an air interface access function of a terminal device and an air interface function of a base station. The relay node exists as an extension of a cell of a donor base station and is managed by the donor base station. From a perspective of a core network, the L3 relay node is invisible. An S1 interface connection is implemented between the core network and the donor base station, and an X2 interface connection is implemented between donor base stations.

It should be understood that, in FIG. 5, two relay nodes are used as an example for description. This application is not limited thereto. There may be one relay node, or may be a plurality of relay nodes.

It should be further understood that the embodiments of this application are described by using an example in which a network device is a donor base station, and the embodiments of this application are not limited thereto.

To facilitate understanding of the embodiments of this application, the following briefly describes nouns or terms in this application.

It should be noted that, during the embodiments of this application, "protocol" may refer to a standard protocol in the communications field, and for example, may include an LTE protocol, an NR protocol, and a related protocol applied to a future communications system. This is not limited in this application.

It should be further noted that, in the embodiments of this application, "predefinition" may be implemented by pre-storing corresponding code or a table in a device (for example, including a terminal device and a network device) or in another manner that can be used to indicate related information. A specific implementation of the "predefinition" is not limited in this application. For example, the predefinition may refer to defining in a protocol.

It should be further noted that in the embodiments of this application, nouns "network" and "system" are usually interchangeably used. However, a person skilled in the art may understand meanings of the nouns. "Information (information)", "signal (signal)", "message (message)", and "channel (channel)" may be interchangeably used sometimes. It should be noted that meanings expressed by the terms are consistent when a difference between the terms is not emphasized. "Of (of)", "corresponding (corresponding, relevant)", and "corresponding to (corresponding)" may be interchangeably used sometimes. It should be noted that meanings expressed by the terms are consistent when a difference between the terms is not emphasized.

It should be further noted that in the embodiments of this application, "report" and "feed back" are usually interchangeably used. However, a person skilled in the art may understand meanings of the terms. For a terminal device, both reporting information and feeding back information may be essentially sending information through a physical uplink channel. Therefore, in the embodiments of this application, meanings expressed by the terms are consistent when a difference between the terms is not emphasized.

It should be noted that, in the embodiments of this application, "first", "second", "third", and "fourth" are merely used to distinguish between different objects. For example, first downlink information indicates one piece of information of downlink transmission, and second downlink information indicates another piece of information of downlink transmission. However, this application is not limited thereto.

It should be further noted that "and/or" describes an association relationship between associated objects and represents that three relationships may exist. For example, A and/or B may represent the following three cases: Only A exists, both A and B exist, and only B exists. The character "/" usually indicates an "or" relationship between the associated objects. "At least one" means one or more. "At least one of A and B" is similar to "A and/or B", describes an association relationship between associated objects, and indicates that three relationships may exist. For example, at least one of A and B may represent the following three cases: Only A exists, both A and B exist, and only B exists. The following describes the technical solutions provided in this application in detail with reference to the accompanying drawings.

It should be understood that the cell establishment method provided by this application may be applied to a wireless system, for example, the system 100 shown in FIG. 1. The terminal device in the embodiments of this application may simultaneously communicate with one or more network devices. For example, the terminal device in the embodiments of this application may correspond to the terminal device 110 in FIG. 1. The relay node in the embodiments of this application may correspond to the relay node device 120 in FIG. 1. The base station in the embodiments of this application may correspond to the network device 130 in FIG. 1.

Without loss of generality, the following describes the embodiments of this application in detail by using a process of interaction between a terminal device #A, a base station #A, and a relay node #A as an example. The terminal device #A may be any terminal device that is in a communications system and that has a wireless connection relationship with one or more network devices. The relay node #A may be any relay node that can provide a wireless access link and a wireless backhaul link. It may be understood that any terminal device or any relay node in the communications system may implement wireless communication based on a same technical solution. This is not limited in this application.

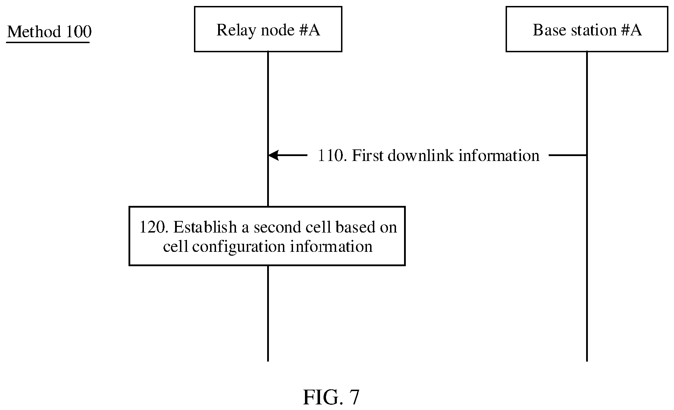

FIG. 7 is a schematic flowchart of a cell establishment method 100 from a perspective of device interaction according to an embodiment of this application. As shown in the figure, the method 100 shown in FIG. 7 may include step 110 and step 120. The following describes the method 100 in detail with reference to FIG. 7.

110. The base station #A sends first downlink information to the relay node #A, where the first downlink information includes cell configuration information for a cell #A, and the cell #A is a cell of a base station.

120. The relay node #A establishes a relay cell based on the cell configuration information, where the relay cell serves as extended coverage of the cell #A, and a cell global identifier and/or physical cell identifier of the relay cell are/is the same as those/that of the cell #A.

In this embodiment of this application, the relay node #A may be used as a special terminal to send connection establishment request information to the base station #A. Optionally, the relay node #A may request a core network to perform authentication and authorization on the relay node #A, to ensure that the relay node #A is a valid node.

Optionally, the connection establishment request information sent by the relay node #A to the base station #A may carry identification information, and the identification information is used to identify the relay node #A, so that the base station #A can identify the relay node #A.

After receiving the connection establishment request information of the relay node #A, the base station #A identifies the relay node #A, and sends downlink information (namely, an example of the first downlink information) to the relay node #A, where the downlink information includes cell configuration information of the cell #A (namely, an example of the first cell). The cell #A is any cell of the base station #A. The relay node #A replicates the cell configuration information of the cell #A, and configures the relay cell (namely, an example of a second cell) based on the cell configuration information. The relay node #A (which may also be referred to as a cell of the relay node #A) may also be used as an extension of the base station #A, or may be used as an extension of coverage of the cell #A in the base station #A.

It should be noted that in the embodiments of this application, in the embodiments of this application, "establish" and "configure" are usually interchangeably used. However, a person skilled in the art may understand meanings of the terms. For a relay node, cell establishment and cell configuration both essentially refer to establishing a cell by using cell configuration information. Therefore, in the embodiments of this application, meanings expressed by the terms are consistent when a difference between the terms is not emphasized.

Optionally, the relay node #A may also obtain the cell configuration information by reading a system message of any cell of the base station #A. Alternatively, the base station #A obtains the cell configuration information from OAM, and the base station #A sends the cell configuration information to the relay node #A.

It should be noted that in this embodiment of this application, the relay cell is used to represent a cell configured by the relay node or a cell in the relay node. The relay cell may be used as an extension of any cell of the base station.

Optionally, the cell configuration information obtained by the relay node #A may further include at least one of the following: key configuration information of the cell, access information of the serving cell and scheduling information of another system message block, configuration information related to a wireless common resource, information related to cell selection and reselection, access control information, system time information, and the like.

The key configuration information of the cell may include but is not limited to at least one of the following: a system (super) frame number, scheduling information of a system message, an access control enable indication, a deployment mode, a system message change label, and downlink frequency information.

The configuration information related to the wireless common resource may include but is not limited to at least one of the following: a terminal timer, a constant, and an uplink frequency.

The information related to cell selection and reselection may include but is not limited to neighboring cell configuration information.

The access control information may include but is not limited to at least one of the following: access class barring (access class barring, ACB), extended access class barring (extended access class barring, EAB), access barring (access barring, AB), service-specific access control (service specific access control, SSAC), and application specific congestion control for data communication (application specific congestion control for data communication, ACDC).

The system time information may include but is not limited to at least one of the following: a global positioning time (global positioning system time, GPS time) and a coordinated universal time (coordinated universal time, UTC).

Optionally, the downlink information includes a cell global identifier and/or a physical cell identifier of the cell #A. The relay node #A and the cell #A share the same cell global identifier and physical cell identifier. A terminal device that selects the relay node #A as a serving cell considers that relay node #A and the cell #A are the same cell.

Optionally, allocation of a cell radio network temporary identifier (cell radio network temporary identifier, C-RNTI) resource may be coordinated between the base station #A and the relay node #A.

Specifically, the base station #A may allocate a C-RNTI to the relay node #A, and the C-RNTI is used to identify the relay node #A. The base station #A may further allocate a resource related to the C-RNTI to the relay node #A, and the resource related to the C-RNTI is used by the relay node #A to allocate the C-RNTI to a terminal device accessing the relay node #A.

Optionally, the relay node #A communicates with the base station #A through an air interface.

The relay node #A is enabled to use only the air interface for communication, for example, an X2 interface and an S1 interface are not used and only an air interface is used between relay nodes and between interfaces of a relay node and a base station, so that a function of a multi-hop relay can be simpler.

Optionally, the relay node #A receives first RRC information sent by the terminal device #A. The relay node #A generates second RRC information, where the second RRC information includes information elements of the first RRC information. The relay node #A sends the second RRC information to the base station #A.

Optionally, the relay node #A parses the first RRC information, including: The relay node #A parses content of the first RRC information by using a function of proxy RRC, and includes, in an RRC container, information elements that are in the first RRC information and that are reported by the terminal device #A to the base station #A.

The terminal device#A, the relay node#A, and the base station#A can exchange information with each other. The relay node #A may send, to the base station #A, the RRC information elements reported by the terminal device #A to the base station #A. Specifically, the terminal device #A sends RRC information (namely, an example of the first RRC information) to the relay node #A. After receiving the information, the relay node #A can parse content of the information by using a function of proxy RRC that is in the relay node #A and that is used to parse the RRC information. Then, the relay node #A sends, to the base station #A by using constructed new RRC information, the RRC information elements that are sent by the terminal device #A to the base station #A. Based on different interaction processes, the first RRC information varies. For example, the first RRC information may be but is not limited to any one of the following: RRC connection establishment request information, RRC connection establishment complete information, RRC connection configuration complete information, RRC connection re-establishment request information, RRC connection re-establishment complete information, RRC connection reconfiguration complete information, RRC resume request information, RRC resume request complete information, RRC early data transmission request information, an uplink information transmission message, and the like.

Based on the foregoing technical solution, the RRC container carries the RRC information elements exchanged between the terminal device #A and the base station #A. The relay node #A places the information elements of the information that are reported by the terminal device #A to the base station #A into an RRC container (container), to reduce standardized modifications.

It should be noted that, in this embodiment of this application, RRC corresponding to the relay node #A is indicated by using proxy RRC, and RRC corresponding to the base station #A is indicated by using primary RRC or RRC. This is merely used to distinguish between the RRC of the relay node #A and the RRC of the base station #A, and constitute no limitation on the scope of this embodiment of this application.

Optionally, the relay node #A receives second downlink information sent by the base station #A, where the second downlink information includes third RRC information for the terminal device #A. The relay node #A generates fourth RRC information, where the fourth RRC information includes information elements of the third RRC information. The relay node #A sends the fourth RRC information to the terminal device #A.

Optionally, the relay node #A parses the second downlink information, including: The relay node #A parses content of the second downlink information by using a function of proxy RRC, and includes, in an RRC container, information elements that are in the second downlink information and that are reported by the terminal device #A to the base station #A.

Specifically, the terminal device #A, the relay node #A, and the base station #A may exchange information with each other. The relay node #A may first parse content of the information sent by the base station #A to the terminal device #A, and then send the information to the terminal device #A. Specifically, when sending the third RRC information to the terminal device #A, the base station #A may first send downlink information (namely, an example of the second downlink information) to the relay node #A, where the downlink information includes the third RRC information. After receiving the information, the relay node #A may parse the downlink information by using a function of the proxy RRC (that is, a function that is used to parse RRC information and that is of the relay node #A). Then, the relay node #A sends, to the terminal device #A by using constructed new RRC information, RRC information elements that are sent by the base station #A to the terminal device #A. Based on different interaction processes, the third RRC information varies. For example, the third RRC information may be but is not limited to any one of the following: RRC connection establishment information, RRC connection re-establishment information, RRC connection reconfiguration information, RRC connection release information, RRC connection resume information, RRC early data transmission complete information, a downlink information transmission message, and the like.

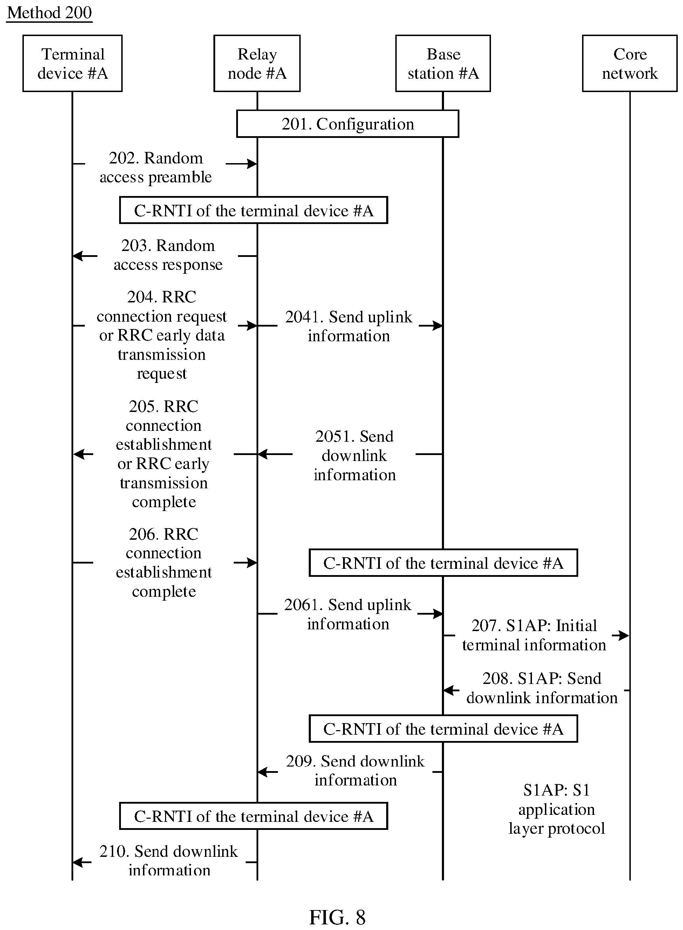

In an architecture of a relay protocol in this embodiment of this application, interaction between the relay node, the terminal device, and the base station can be implemented. The following separately describes a specific interaction process from perspectives of control plane transmission and user plane transmission with reference to FIG. 8 to FIG. 10.

FIG. 8 is a schematic diagram of a cell establishment method 200 applicable to another embodiment of this application. In the method 200, an access process of a transmission solution on a control plane is used as an example for description. The method 200 includes steps 201 to 210. The following describes the steps in detail.

201. A relay node #A performs configuration.

Specifically, the relay node #A may be used as a special terminal to initiate connection establishment request information to the base station #A. Optionally, the relay node #A may request a core network to perform authentication and authorization on the relay node #A, to ensure that the relay node #A is a valid node.

Optionally, the connection establishment request information sent by the relay node #A to the base station #A may carry identification information, and the identification information is used to identify the relay node #A, so that the base station #A can identify the relay node #A.

After receiving the connection establishment request information of the relay node #A, the base station #A sends downlink information to the relay node #A, where the downlink information includes cell configuration information of a cell #A (namely, an example of a first cell), and the cell #A is any cell of the base station #A. The relay node #A replicates cell configuration information of the cell #A, and configures a cell based on the cell configuration information. The relay node #A may be used as an extension of the base station #A, or may be used as an extension of coverage of the cell #A in the base station #A.

Optionally, the relay node #A may also obtain the cell configuration information by reading a system message of any cell of the base station #A.

Optionally, the downlink information includes a cell global identifier and/or a physical cell identifier of the cell #A. The relay node #A and the cell #A share the same cell global identifier and physical cell identifier. A terminal device that selects the relay node #A as a serving cell considers that relay node #A and the cell #A are the same cell.

Optionally, the cell configuration information obtained by the relay node #A may further include at least one of the following: key configuration information of the cell, access information of the serving cell and scheduling information of another system message block, configuration information related to a wireless common resource, information related to cell selection and reselection, access control information, system time information, and the like.

The key configuration information of the cell may include but is not limited to at least one of the following: a system (super) frame number, scheduling information of a system message, an access control enable indication, a deployment mode, a system message change label, and downlink frequency information.

The configuration information related to the wireless common resource may include but is not limited to at least one of the following: a terminal timer, a constant, and an uplink frequency.

The information related to cell selection and reselection may include but is not limited to neighboring cell configuration information.

The access control information may include but is not limited to at least one of the following: ACB, EAB, SSAC, ACDC, AB access information, and the like.

The system time information may include but is not limited to at least one of the following: a GPS time and a UTC.

Optionally, allocation of a C-RNTI resource may be coordinated between the base station #A and the relay node #A. Specifically, the base station #A may allocate a C-RNTI to the relay node #A, and the C-RNTI is used to identify the relay node #A. The base station #A may further allocate a resource related to the C-RNTI to the relay node #A, and the resource related to the C-RNTI is used by the relay node #A to allocate the C-RNTI to a terminal device accessing the relay node #A.

202. The terminal device #A sends a random access preamble to the relay node #A.

Specifically, the terminal device #A selects the relay node #A as a serving cell. For example, the terminal device #A may select the relay node #A (or a cell in the relay node #A) as a serving cell based on strength and/or quality of an air interface radio signal of the relay node #A. To access the relay node #A, the terminal device #A sends the random access preamble to the relay node #A. After receiving the random access preamble sent by the terminal device #A, the relay node #A allocates a C-RNTI to the terminal device #A, and allocates a resource required when the terminal device #A sends an RRC connection request.

203. The relay node #A sends a random access response to the terminal device #A.

Specifically, the relay node #A sends response information to the terminal device #A, where the response information may include a resource required by the terminal device #A for sending the RRC connection request or an RRC early data transmission request, and may further include the C-RNTI allocated by the relay node #A to the terminal device #A.

204. The terminal device #A sends the RRC connection request or the RRC early data transmission request message to the relay node #A.

Specifically, the terminal device #A sends the RRC connection establishment request information or the RRC early data transmission request message (namely, an example of first RRC information) to the relay node #A on a resource allocated by the relay node #A.

2041. The relay node #A sends uplink information to the base station #A.

Specifically, after receiving the RRC connection establishment request information or the RRC early data transmission message sent by the terminal device #A, the relay node #A sends the RRC connection establishment request information or the RRC early data transmission request message to the base station #A. In other words, the relay node #A sends the uplink information (namely, an example of second RRC information) to the base station #A by using proxy RRC. The uplink information includes the RRC connection establishment request information or the RRC early data transmission request message. Information elements of the RRC connection establishment request information may be carried in an RRC container. Optionally, the RRC connection establishment request information includes a user identity (identity, ID) of the terminal device #A, for example, a 40-bit random number or a serving-temporary mobile subscriber identity (serving-temporary mobile subscriber identity, S-TMSI). The RRC early data transmission request message includes a NAS protocol data unit (protocol data unit, PDU). The proxy RRC may be understood as RRC corresponding to the relay node #A, and the primary RRC or RRC may be understood as RRC corresponding to the base station #A.

Optionally, the terminal device #A may further send capability information (that is, another example of the first RRC information) to the relay node #A. After receiving the capability information, the relay node #A sends uplink information (that is, another example of the second RRC information) to the base station #A, includes information elements of the capability information in the RRC container, and sends the information elements to the base station #A.

2051. The base station #A sends downlink information to the relay node #A.

Specifically, after receiving the RRC connection establishment request information or the RRC early data transmission request message sent by the relay node #A, the base station #A sends RRC connection establishment information or an RRC early transmission complete message (namely, an example of the third RRC information) to the terminal device #A through the relay node #A. Specifically, the base station #A sends downlink information (namely, an example of the second downlink information) to the relay node #A, where the downlink information includes the RRC connection establishment information sent by the base station #A to the terminal device #A. Optionally, the downlink information further includes the ID of the terminal device #A, for example, a C-RNTI. After receiving the downlink information, the relay node #A parses the downlink information. Specifically, the relay node #A may parse, by using a function of the proxy RRC, the RRC connection establishment information or the early data transmission complete message that is of the terminal device #A and that is constructed by the primary RRC of the base station #A, and send the RRC connection establishment information or the early data transmission complete message to the terminal device #A. The RRC early data transmission complete message includes a non-access stratum protocol data unit (non-access stratum protocol data unit, NAS PDU). The proxy RRC may be understood as RRC corresponding to the relay node #A, and the primary RRC or RRC may be understood as RRC corresponding to the base station #A.

Optionally, information elements of the RRC connection establishment information or information elements of the RRC early data transmission complete message are carried in the RRC container. The RRC container carries RRC information elements exchanged between the terminal device #A and the base station #A.

205. The relay node #A sends the RRC connection establishment information or the RRC early data transmission complete message to the terminal device #A.

Specifically, after parsing the downlink information, the relay node #A generates RRC information (namely, an example of fourth RRC information). The RRC information includes the RRC connection establishment information or the RRC early data transmission complete message sent by the base station #A to the terminal device #A. The relay node #A sends the RRC connection establishment information or the RRC early transmission complete message to the terminal device #A. After receiving the RRC connection establishment information or the RRC early transmission complete message, the terminal device #A establishes an RRC connection based on configuration information in the RRC connection establishment information, or sends the carried NAS PDU to the terminal device #A based on the RRC early transmission complete message and releases an RRC connection.

206. The terminal device #A sends RRC connection establishment complete information to the relay node #A.

Specifically, after receiving the RRC connection establishment information, the terminal device #A establishes the RRC connection based on the configuration information in the RRC connection establishment information, to complete RRC connection establishment. Then, the terminal device #A sends the RRC connection establishment complete information (namely, an example of the first RRC information) to the relay node #A. If the terminal device #A has uplink data, the uplink data may be placed in the NAS PDU of the RRC connection establishment complete information.

2061. The relay node #A sends uplink information to the base station #A.

Specifically, similar to processing of the RRC connection establishment request information, the relay node #A sends the uplink information (namely, an example of the second RRC information) to the base station #A, where the uplink information carries the RRC connection establishment complete information sent by the terminal device #A, and may further carry the ID of the terminal device #A, for example, the C-RNTI. Information elements of the RRC connection establishment complete information, the ID of the terminal device #A, and the like may be carried in the RRC container.

207. The base station #A sends initial terminal information to a core network by using an S1 application protocol (S1 application protocol, S1AP).

Specifically, after receiving the RRC connection establishment complete information of the terminal device #A or receiving the RRC early data transmission request information of the terminal device #A, the base station #A establishes an S1 connection to the core network (for example, an MME) for the terminal device #A. The method for establishing the S1 connection is similar to that in the current technology. For example, the base station #A sends the initial terminal information to the core network by using the S1AP; or the base station #A sends obtained information related to the terminal device #A to the core network, where optionally, the obtained information carries a NAS PDU sent by terminal device #A to the core network.

208. The core network sends downlink information to the base station #A by using the S1AP.

Specifically, the core network sends the downlink information to the base station #A, where the downlink information includes context setup request information of the terminal device #A, and/or S1 connection establishment indication information, and/or transmission information sent by the core network to the terminal device #A. Optionally, the downlink information carries the NAS PDU sent by the core network to the terminal device #A.

209. The base station #A sends downlink information to the relay node #A.

Specifically, the base station #A receives the downlink information from the core network. If the downlink information includes downlink data sent to the terminal device #A, the base station #A sends the downlink data to the terminal device #A through the relay node #A. Specifically, the base station #A sends the downlink information (namely, an example of the second downlink information) to the relay node #A, where the downlink information carries RRC information (namely, an example of the third RRC information) sent by the base station #A to the terminal device #A, and the ID of the terminal device #A used for routing, for example, the C-RNTI. After receiving the downlink information, the relay node #A parses, by using the function of the proxy RRC, the information sent by using RRC of the base station #A, and generates, based on the information, downlink information (namely, an example of the fourth RRC information) oriented to the terminal device #A.

If the core network does not have downlink data oriented to the terminal device #A, the base station #A may release a connection to the terminal device #A. The base station #A sends RRC connection release information (namely, an example of the third RRC information) to the terminal device #A through the relay node #A, where the RRC connection release information carries the RRC information sent by the base station #A to the terminal device #A, and the ID of the terminal device #A used for routing, for example, the C-RNTI. After receiving the information, the relay node #A parses, by using the proxy RRC, the information sent by using the RRC of the base station #A, and generates, based on the information, the RRC connection release information oriented to the terminal device #A.

The downlink information sent by the base station #A to the relay node #A carries the RRC information sent by the base station #A to the terminal device #A, and information elements of the RRC information may be carried in the RRC container.

210. The relay node #A sends the downlink information to the terminal device #A.

Specifically, after parsing the downlink information sent by the base station #A, the relay node #A generates RRC information (namely, an example of the fourth RRC information) of the relay node #A, and sends the RRC information of the relay node #A to the terminal device #A. The RRC information of the relay node #A includes information elements of the RRC information (namely, an example of the third RRC information) sent by the base station #A to the terminal device #A.

In this embodiment of this application, primary RRC (or RRC) and proxy RRC are used between the base station and the relay node and between the terminal and the relay node, so that direct communication can be implemented between the base station and the terminal device.

Specifically, when sending RRC information to the base station, the terminal device may first send, to the relay node, uplink information that carries the RRC information. The relay node first parses the uplink information, generates RRC information of the relay node, and then sends, to the base station, the RRC information sent by the terminal device to the base station.

Specifically, when sending RRC information to the terminal device, the base station may first send, to the relay node, downlink information that carries the RRC information. The relay node first parses the downlink information, generates RRC information of the relay node, and then sends, to the terminal device, the RRC information sent by the base station to the terminal device #A.

In this embodiment of this application, information elements of the RRC information sent by the terminal to the base station and information elements of the RRC information sent by the base station to the terminal device may be carried in an RRC container. Communication can be implemented between the base station and the terminal device by using the RRC container, so that impact of standardization can be reduced.

In this embodiment of this application, both the terminal device and the relay node may have respective identifiers, for example, a C-RNTI, so that the relay node and the terminal device can be identified by using the identifiers. Therefore, correct routing of the terminal is implemented.

It should be understood that, the foregoing describes the cell establishment method provided in this embodiment of this application in detail by using interaction between the base station, the relay node, and the terminal device as an example for ease of understanding. However, this should not constitute any limitation on this application. For example, there may be a plurality of relay nodes.

It should be further understood that FIG. 8 is merely for ease of understanding, and schematically shows the steps performed by the base station, the relay node, and the terminal device. However, this does not mean that the base station, the relay node, and the terminal device perform each step shown in the figure. For example, the base station may not perform step 207 to step 209.

It should be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of this application.

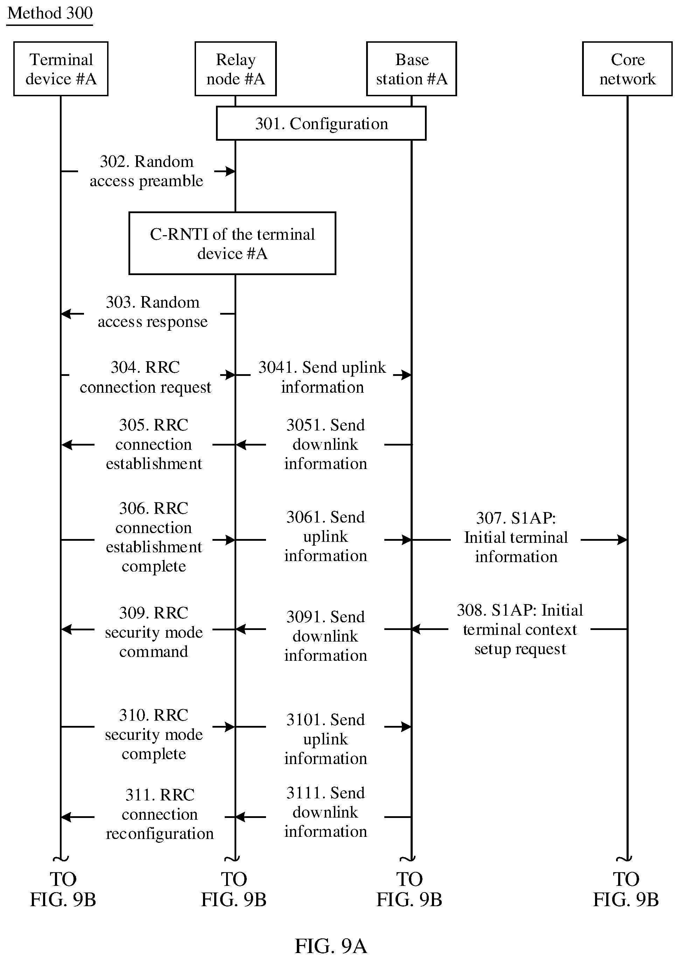

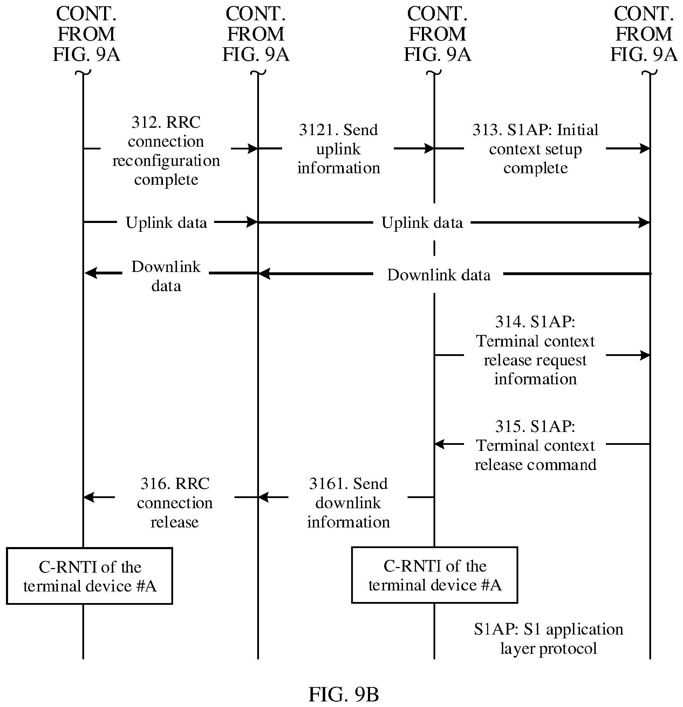

FIG. 9A and FIG. 9B are another specific embodiment applicable to this application. In a method 300, an access process of a transmission solution on a user plane is used as an example for description. The method 300 includes steps 301 to 316. The following describes the steps in detail.

301. A relay node #A performs configuration.

This step is similar to step 201 in the method 200. For brevity, details are not described herein again.

302. A terminal device #A sends a random access preamble to the relay node #A.

This step is similar to step 202 in the method 200. For brevity, details are not described herein again.

303. The relay node #A sends a random access response to the terminal device #A.

This step is similar to step 203 in the method 200. For brevity, details are not described herein again.

304. The terminal device #A sends an RRC connection request to the relay node #A.

This step is similar to step 204 in the method 200. For brevity, details are not described herein again.

3041. The relay node #A sends uplink information to the base station #A.

This step is similar to step 2041 in the method 200. For brevity, details are not described herein again.

3051. The base station #A sends downlink information to the relay node #A.

This step is similar to step 2051 in the method 200. For brevity, details are not described herein again.

305. The relay node #A sends RRC connection establishment information to the terminal device #A.

This step is similar to step 205 in the method 200. For brevity, details are not described herein again.

306. The terminal device #A sends RRC connection establishment complete information to the relay node #A.

This step is similar to step 206 in the method 200. For brevity, details are not described herein again.

3061. The relay node #A sends uplink information to the base station #A.

This step is similar to step 2061 in the method 200. For brevity, details are not described herein again.

307. The base station #A sends initial terminal information to a core network by using an S1AP.

Specifically, after receiving the RRC connection establishment complete information of the terminal device #A, the base station #A requests to establish an S1 connection to the core network for the terminal device #A. The method for establishing the S1 connection is similar to that in the current technology. For example, the base station #A sends the initial terminal information to the core network.

308. The core network sends an initial terminal context request to the base station #A by using the S1AP.

Specifically, the base station #A receives the initial terminal context setup request information sent by the core network. The initial terminal context information sent by the core network may carry a security parameter and bearer configuration information of the terminal device #A, information about the terminal device #A, information about the core network, and the like, for example, routing information of an S-GW.

3091. The base station #A sends downlink information to the relay node #A.

Specifically, after receiving the information from the core network, the base station #A sends RRC configuration information to the terminal device #A through the relay node #A. Specifically, the base station #A sends the downlink information (namely, an example of second downlink information) to the relay node #A, where the downlink information carries information elements of the RRC information (namely, an example of third RRC information) sent to the terminal device #A. The RRC information sent to the terminal device #A may include an RRC security mode command. The information elements of the RRC information sent to the terminal device #A may be carried in an RRC container.

After receiving the downlink information sent by base station #A, the relay node #A parses the downlink information. Then, the relay node #A delivers, to the terminal device #A by using proxy RRC, RRC information (namely, an example of the third RRC information) generated by the base station #A, for example, the RRC security mode command.

309. The relay node #A sends the RRC security mode command to the terminal device #A.

Specifically, it is assumed that the RRC information sent by the base station #A to the terminal device #A is the RRC security mode command. After performing parsing, the relay node #A sends the RRC security mode command (namely, an example of the third RRC information) to the terminal device #A. The terminal device #A performs configuration according to the RRC security mode command.

310. The terminal device #A sends RRC security mode complete information to the relay node #A.

The relay node #A receives the RRC security mode complete information (namely, an example of the first RRC information) sent by the terminal device #A. The relay node #A parses the RRC information and places information elements of the RRC information into the RRC container.

3101. The relay node #A sends uplink information to the base station #A.

The relay node #A parses the RRC information sent by the terminal device #A, places the information elements of the RRC information into the RRC container, and sends the information elements to the base station #A for processing.

3111. The base station #A sends downlink information to the relay node #A.

Specifically, after receiving the information from the core network, the base station #A sends RRC configuration information to the terminal device #A through the relay node #A. Specifically, the base station #A sends the downlink information (namely, an example of the second downlink information) to the relay node #A, where the downlink information carries the RRC information (namely, an example of the third RRC information) sent to the terminal device #A. The RRC information sent to the terminal device #A may include RRC connection reconfiguration information. The information elements of the RRC information sent to the terminal device #A may be carried in an RRC container.

After receiving the downlink information sent by the base station #A, the relay node #A parses the downlink information, for example, performs parsing by using proxy RRC. Then, the relay node #A delivers, to the terminal device #A, the RRC information (namely, an example of the third RRC information) generated by the base station #A, for example, the RRC connection reconfiguration information.

311. The relay node #A sends the RRC connection reconfiguration to the terminal device #A.

Specifically, it is assumed that the RRC information sent by the base station #A to the terminal device #A is the RRC connection reconfiguration information. After performing parsing, the relay node #A sends the RRC connection reconfiguration information (namely, an example of the third RRC information) to the terminal device #A. The terminal device#A performs configuration based on the RRC connection reconfiguration information.

312. The terminal device #A sends RRC connection reconfiguration complete to the relay node #A.

The relay node #A receives the RRC connection reconfiguration complete information (namely, an example of the first RRC information) sent by the terminal device #A. The relay node #A parses information elements of the RRC information, and places the information elements of the RRC information into the RRC container.

3121. The relay node #A sends uplink information to the base station #A.

The relay node #A parses the RRC information sent by the terminal device #A, may directly place the information elements of the RRC information into the RRC container, and sends the information elements to the base station #A for processing.

It should be noted that the RRC connection reconfiguration information and the RRC security mode command may be transmitted in one transmission process. This is not limited in this embodiment of this application.

313. The base station #A sends initial context setup complete to the core network by using the S1AP.

Specifically, the base station #A sends the initial context setup complete information to the core network, to complete setup of a context between the terminal device #A and the core network. The core network and the terminal device #A may transmit uplink and downlink data through the relay node #A. For example, when the terminal device #A sends uplink data to the core network, the terminal device #A may first send the uplink data to relay node #A, and then the relay node #A forwards the uplink data to the core network. For another example, when the core network sends downlink data to the terminal device #A, the core network may first send the downlink data to the relay node #A, and the relay node #A sends the downlink data to the terminal device #A.

314. The base station #A sends terminal context release request information to the core network by using the S1AP.

Specifically, if the core network does not have downlink data oriented to the terminal device #A, the base station #A may send the terminal context release request information to the core network, and release a connection to the terminal device #A.

315. The core network sends a context release command to the base station #A.

3161. The base station #A sends downlink information to the terminal device #A.

Specifically, the base station #A sends the context release request information (namely, an example of the third RRC information) to the terminal device #A through the relay node #A. The base station #A sends the downlink information (namely, an example of the second downlink information) to the relay node #A. The downlink information carries RRC information, for example, RRC connection release information, sent by the base station #A to the terminal device #A, and an ID of the terminal device #A used for routing, for example, a C-RNTI. Information elements carried in the RRC information sent by the base station #A to the terminal device #A may be carried in the RRC container. After receiving the downlink information, the relay node #A parses the downlink information.

316. The relay node #A sends the RRC connection release to the terminal device #A.

The relay node #A parses information sent by using primary RRC of the base station #A, and generates RRC information oriented to the terminal device #A based on the information, where the RRC information includes information elements of the RRC connection release information (namely, an example of the third RRC information).

In this embodiment of this application, direct communication can be implemented between the base station and the terminal device by using the primary RRC and proxy RRC, or by using RRC and proxy RRC between the base station and the relay node.

Specifically, when sending RRC information to the base station, the terminal device may first send, to the relay node, uplink information that carries the RRC information. The relay node first parses the uplink information, generates RRC information of the relay node, and then sends, to the base station, the RRC information sent by the terminal device to the base station.

Specifically, when sending RRC information to the terminal device, the base station may first send, to the relay node, downlink information that carries the RRC information. The relay node first parses the downlink information, generates RRC information of the relay node, and then sends, to the terminal device, the RRC information sent by the base station to the terminal device #A.

In this embodiment of this application, the information elements of the RRC information sent by the base station to the terminal device may be carried in the RRC container. Communication can be implemented between the base station and the terminal device by using the RRC container, so that impact of standardization can be reduced.

In this embodiment of this application, both the terminal device and the relay node may have respective identifiers, for example, a C-RNTI, so that the relay node and the terminal device can be identified by using the identifiers. Therefore, correct routing of the terminal is implemented.

It should be understood that, the foregoing describes the cell establishment method provided in this embodiment of this application in detail by using interaction between the base station, the relay node, and the terminal device as an example for ease of understanding. However, this should not constitute any limitation on this application. For example, there may be a plurality of relay nodes.

It should be further understood that FIG. 9A and FIG. 9B are merely for ease of understanding, and schematically shows the steps performed by the base station, the relay node, and the terminal device. However, this does not mean that the base station, the relay node, and the terminal device perform each step shown in the figure. For example, the base station may not perform step 313 to step 316.

It should be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of this application.

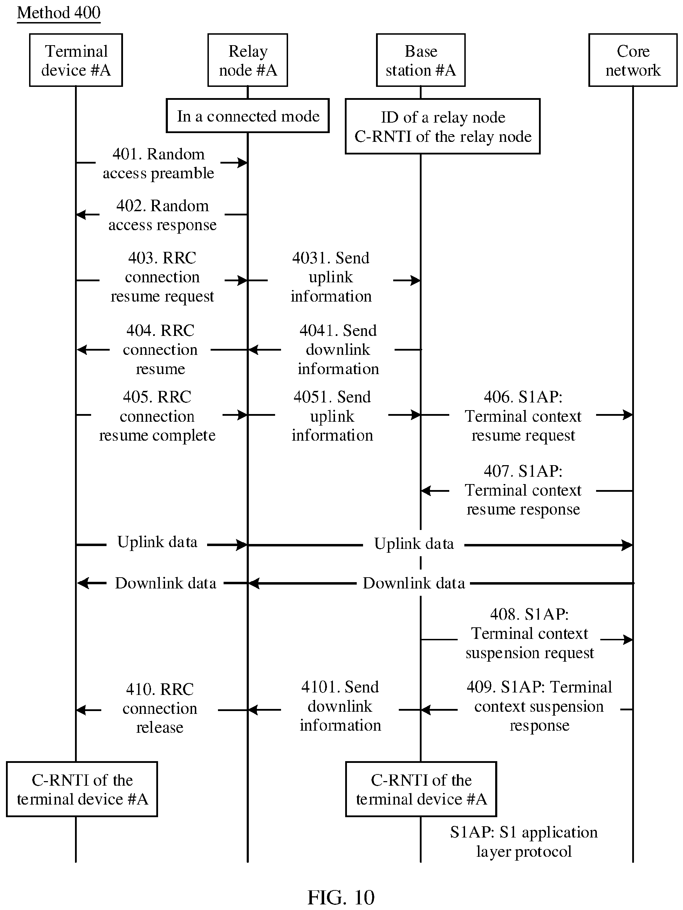

FIG. 10 is another specific embodiment applicable to this application. In a method 400, a resume process of a transmission solution on a user plane is used as an example for description. The method 400 includes steps 401 to 410. The following describes the steps in detail.

First, a relay node #A is in a connected mode. This step is similar to step 201 and step 301. For brevity, details are not described herein again.

401. A terminal device #A sends a random access preamble to the relay node #A.

This step is similar to step 202 and step 302. For brevity, details are not described herein again.

402. The relay node #A sends a random access response to the terminal device #A.

This step is similar to step 203 and step 303. For brevity, details are not described herein again.

403. The terminal device #A sends an RRC connection resume request to the relay node #A.

Specifically, the terminal device #A sends the RRC connection resume request information (namely, an example of first RRC information) to the relay node #A on a resource scheduled by the relay node #A, where the RRC connection resume request information of the terminal device #A may carry information such as a resume (resume) ID, a security parameter MAC-I, and an establishment cause value of the terminal device #A.

4031. The relay node #A sends uplink information to the base station #A.

Specifically, the relay node #A forwards, to the base station #A, the RRC connection resume request information initiated by the terminal device #A, and the relay node #A sends the uplink information (namely, an example of second RRC information) to the base station #A, where the uplink information includes information elements of RRC information (for example, RRC request information) of the terminal device #A, and an ID of the terminal device #A, for example, a C-RNTI. The information elements of the RRC information may be placed into an RRC container.

4041. The base station #A sends downlink information to the relay node #A.

Specifically, after the base station #A receives the RRC connection resume request of the terminal device #A, the base station #A obtains a context of the terminal device #A, and sends RRC connection resume information (namely, an example of third RRC information) to the terminal device #A through the relay node #A. Specifically, the base station #A sends the downlink information (namely, an example of second downlink information) to the relay node #A, where the downlink information carries information elements of the RRC connection resume information sent by the base station #A to the terminal device #A, and may further carry an ID of the terminal device #A, for example, a C-RNTI. The information elements of the RRC information sent to the terminal device #A may be carried in the RRC container.

404. The relay node #A sends the RRC connection resume to the terminal device #A.

Specifically, after receiving the downlink information, the relay node #A parses the downlink information, and sends, to the terminal device #A by using proxy RRC, the RRC connection resume information (namely, the example of the third RRC information) sent by the base station #A to the terminal device #A.

405. The terminal device #A sends RRC connection resume complete to the relay node #A.

Specifically, the terminal device #A completes RRC connection resume based on configuration information in the RRC connection resume information, and then sends the RRC connection resume complete information (namely, an example of the first RRC information) to the relay node #A.

4051. The relay node #A sends uplink information to the base station #A.

Similar to processing of the RRC connection establishment request information, the relay node #A sends uplink information (namely, an example of the second RRC information) to the base station #A, where the uplink information carries RRC information (namely, an example of the first RRC information) sent by the terminal device #A, for example, the RRC connection resume complete information, and/or the ID of the terminal device #A, for example, the C-RNTI. Information elements of the RRC information sent by the terminal device #A may be carried in the RRC container.

406. The base station #A sends a terminal context resume request to a core network by using an S1AP.

Specifically, after receiving the connection resume complete information of the terminal device #A, the base station #A resumes an S1 connection to the core network for the terminal device #A. The method for resuming the S1 connection is similar to that in the current technology. For example, base station #A sends terminal device #A context resume request information to the core network.

407. The core network sends a terminal context resume response to the base station #A by using the S1AP.

Specifically, after receiving the context resume request information sent by the base station #A, the core network sends the context resume response information to the base station #A, to resume the S1 connection for the terminal device #A. In this case, the core network and the terminal device #A start to transmit uplink and downlink data. For example, when the terminal device #A sends uplink data to the core network, the terminal device #A may first send the uplink data to relay node #A, and then the relay node #A forwards the uplink data to the core network. For another example, when the core network sends downlink data to the terminal device #A, the core network may first send the downlink data to the relay node #A, and then the relay node #A sends the downlink data to the terminal device #A.

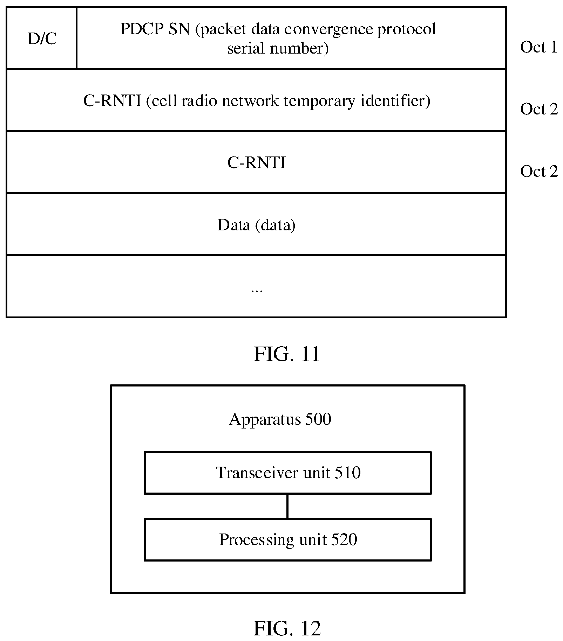

Optionally, in the terminal device #A and the relay node #A, data routing of the base station #A may be implemented by adding the C-RNTI of the terminal device #A to a PDCP header. A specific format of a PDCP layer is shown in FIG. 11. A PDCP SN is a PDCP serial number (serial number, SN), and D/C is a control PDU/data PDU. A C-RNTI field is recorded as a carried C-RNTI of the terminal device.

408. The base station #A sends a terminal context suspension request to the core network by using the S1AP.

Specifically, if the core network does not have downlink data oriented to the terminal device #A, the base station #A may send the terminal device #A context suspension request information to the core network.

409. The core network sends a terminal context suspension response to the base station #A by using the S1AP.

Specifically, the core network sends the terminal device #A context suspension response information to the base station #A, and releases the connection for the terminal device #A.

4101. The base station #A sends downlink information to the relay node #A.

Specifically, after receiving the information from the core network, the base station #A sends RRC connection release information to the terminal device #A through the relay node #A. Specifically, the base station #A sends the downlink information (namely, an example of second downlink information) to the relay node #A, where the downlink information carries information elements of the RRC information (namely, an example of third RRC information) sent to the terminal device #A. The RRC information sent to the terminal device #A includes the RRC connection release information and/or the ID of the terminal device #A used for routing, for example, the C-RNTI. The information elements of the RRC information sent to the terminal device #A may be carried in an RRC container.

410. The relay node #A sends the RRC connection release to the terminal device #A.

Specifically, after receiving the downlink information sent by the base station #A, the relay node #A parses the downlink information, and generates RRC connection release information (namely, an example of the third RRC information) oriented to the terminal device #A based on the downlink information. The relay node #A releases an RRC connection of the terminal device #A according to a suspension indication in the RRC connection release information, and stores a context of the terminal device #A, where the context includes a resume id of the terminal device #A.

The relay node #A delivers, to the terminal device #A by using proxy RRC, the RRC information sent by the base station #A to the terminal device #A, for example, the RRC connection release information.

Based on the foregoing technical solution, the relay node may be used as a terminal to initiate an access request to the base station. After receiving the access request, the base station sends response information to the relay node, and sends cell configuration information of any cell of the base station to the relay node, so that the relay node completes configuration based on the cell configuration information. Alternatively, the relay node may directly read a broadcast message of any cell of the base station to obtain configuration information of any cell of the base station, and the relay node completes configuration based on the configuration information of the cell. Then, the relay node may be used as an extension of coverage of the base station, or the relay node may be used as an extension of coverage of any cell of a base station, instead of an independent cell, so that cell-specific configuration information and the like do not need to be obtained from operation, administration and maintenance. The relay node exists as an extension of a cell of the base station and is managed by the base station. From a perspective of the core network, the relay node may be invisible. Therefore, the relay node is considered as the extension of the cell of the base station and is managed by the base station. This avoids complexity of operation, administration and maintenance and bandwidth consumption.

Based on the foregoing technical solution, only the air interface is used for communication between relay nodes and between a relay node and a base station, so that a multi-hop relay function is simpler.

It should be understood that, the foregoing describes the cell establishment method provided in this embodiment of this application in detail by using interaction between the base station, the relay node, and the terminal device as an example for ease of understanding. However, this should not constitute any limitation on this application. For example, there may be a plurality of relay nodes.

It should be further understood that FIG. 10 is merely for ease of understanding, and schematically shows steps performed by the base station, the relay node, and the terminal device. However, this does not mean that the base station, the relay node, and the terminal device perform each step shown in the figure.

It should be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of this application.

The foregoing describes in detail the cell establishment method in the embodiments of this application with reference to FIG. 7 to FIG. 11. The following describes in detail a cell establishment apparatus in the embodiments of this application with reference to FIG. 12 to FIG. 14.

FIG. 12 is a schematic block diagram of a cell establishment apparatus according to an embodiment of this application. As shown in FIG. 12, the apparatus 500 may include a transceiver unit 510 and a processing unit 520.

In a possible design, the apparatus 500 may be a relay node or a chip configured in a relay node.

In a possible implementation, the transceiver unit 510 may be configured to receive first downlink information sent by a base station, where the first downlink information includes cell configuration information of a first cell, and the first cell is a cell of the base station.

The processing unit 520 may be configured to establish a second cell based on the cell configuration information, where the second cell serves as extended coverage of the first cell, and a cell global identifier and/or a physical cell identifier of the second cell are/is the same as those/that of the first cell.

Optionally, the relay node communicates with the base station through an air interface.

Optionally, the transceiver unit 510 may be further configured to receive first radio resource control RRC information sent by a terminal device. The processing unit 520 may be configured to generate second RRC information, where the second RRC information includes information elements of the first RRC information. The transceiver unit 510 may be further configured to send the second RRC information to the base station.

Optionally, the processing unit 520 is specifically configured to: parse content of the first RRC information by using a function of proxy RRC, and include some or all of the information elements of the first RRC information in an RRC container.

Optionally, the transceiver unit 510 may be further configured to receive second downlink information sent by the base station, where the second downlink information includes third RRC information for the terminal device.

The processing unit 520 may be further configured to generate fourth RRC information, where the fourth RRC information includes information elements of the third RRC information.

The transceiver unit 510 is configured to send the fourth RRC information to the terminal device.

Optionally, the processing unit 520 is specifically configured to: parse content of the second downlink information by using the function of the proxy RRC, and carry, in the RRC container, the information elements that are in the second downlink information and that are sent by the base station to the terminal device.

Optionally, the second RRC information and/or the third RRC information include/includes an identifier of the terminal device, and the identifier includes at least any one of the following:
a serving temporary mobile subscriber identity S-TMSI, a cell radio network temporary identifier C-RNTI, a random number, and a resume identifier.

Optionally, the first RRC information includes at least any one of the following:
RRC connection establishment request information. RRC connection establishment complete information, RRC connection configuration complete information, RRC connection re-establishment request information, RRC connection re-establishment complete information, RRC connection reconfiguration complete information, RRC resume request information, RRC resume request complete information, RRC early data transmission request information, and an uplink information transmission message.

Optionally, the third RRC information includes at least any one of the following:
RRC connection establishment information, RRC connection re-establishment information, RRC connection reconfiguration information, RRC connection release information, RRC connection resume information, RRC early data transmission complete information, and a downlink information transmission message.

Optionally, the cell configuration information includes a cell global identifier and/or a physical cell identifier of the first cell.

Optionally, the cell configuration information further includes at least one of the following: key configuration information of the cell, access information of the serving cell and scheduling information of another system message block, configuration information related to a wireless common resource, information related to cell selection and reselection, access control information, and system time information.

Specifically, the apparatus 500 may correspond to the relay node in the method 100 to the method 400 according to the embodiments of this application. The apparatus 500 may include a module configured to perform a method performed by the relay node in the method 100 to the method 400. In addition, modules in the apparatus 500 and the foregoing other operations and/or functions are respectively intended to implement corresponding procedures of the method 100 to the method 400 in FIG. 7 to FIG. 10. Specifically, the transceiver unit 510 may be configured to perform step 110 in the method 100. The transceiver unit 510 may be further configured to perform step 202 to step 2061 and step 209 and step 210 in the method 200. The transceiver unit 510 may be further configured to perform step 302 to step 3121, step 316, and step 3161 in the method 300. The transceiver unit 510 may be further configured to perform step 401 to step 4051, step 410, and step 4101 in the method 400. The processing unit 520 is configured to perform step 120 in the method 100, step 201 in the method 200, and step 301 in the method 300. A specific process in which each unit performs the foregoing corresponding step is described in detail in the method 100 to the method 400. For brevity, details are not described herein again.

In another possible design, the apparatus 500 may be a base station or a chip configured in a base station.

In a possible implementation, the processing unit 520 is configured to determine the cell configuration information of the first cell, where the first cell is the cell of the base station.

The transceiver unit 510 is configured to send the first downlink information to the relay node, where the first downlink information includes the cell configuration information, the cell configuration information is used by the relay node to establish the second cell, the second cell serves as the extended coverage of the first cell, and the cell global identifier and/or the physical cell identifier of the second cell are/is the same as those/that of the first cell.

Optionally, the base station communicates with the relay node through the air interface.

The transceiver unit 510 is configured to receive the first radio resource control RRC information sent by the relay node, where the first RRC information is information sent by the terminal device to the relay node.

Optionally, the transceiver unit 510 may be further configured to send the second downlink information to the relay node, where the second downlink information includes the third RRC information for the terminal device.

Optionally, the first RRC information and/or the third RRC information are/is carried in the RRC container.

Optionally, the second RRC information and/or the third RRC information include/includes an identifier of the terminal device, and the identifier includes at least any one of the following:
a serving temporary mobile subscriber identity S-TMSI, a cell radio network temporary identifier C-RNTI, a random number, and a resume identifier.

Optionally, the first RRC information includes at least any one of the following:
RRC connection establishment request information. RRC connection establishment complete information, RRC connection configuration complete information, RRC connection re-establishment request information, RRC connection re-establishment complete information, RRC connection reconfiguration complete information, RRC resume request information, RRC resume request complete information, RRC early data transmission request information, and an uplink information transmission message.

Optionally, the third RRC information includes at least any one of the following:
RRC connection establishment information, RRC connection re-establishment information, RRC connection reconfiguration information, RRC connection release information, RRC connection resume information, RRC early data transmission complete information, and a downlink information transmission message.

Optionally, the cell configuration information includes a cell global identifier and/or a physical cell identifier of the first cell.

Optionally, the cell configuration information further includes at least one of the following: key configuration information of the cell, access information of the serving cell and scheduling information of another system message block, configuration information related to a wireless common resource, information related to cell selection and reselection, access control information, and system time information.

Specifically, the apparatus 500 may correspond to the base station in the method 100 to the method 400 according to the embodiments of this application. The apparatus 500 may include a module configured to perform a method performed by the base station in the method 100 to the method 400. In addition, modules in the apparatus 500 and the foregoing other operations and/or functions are respectively intended to implement corresponding procedures of the method 100 to the method 400 in FIG. 7 to FIG. 10. Specifically, the transceiver unit 510 may be configured to perform step 110 in the method 100. The transceiver unit 510 may be further configured to perform step 2041, step 2051, step 2061, and step 207 to step 209 in the method 200. The transceiver unit 510 may be further configured to perform step 3041, step 3051, step 3061, step 3091, step 3101, step 3111, step 3121, step 307, step 308, step 313 to step 315, and step 3161 in the method 300. The transceiver unit 510 may be further configured to perform step 4031, step 4041, step 406 to step 409, and step 4101 in the method 400. A specific process in which each unit performs the foregoing corresponding step is described in detail in the method 100 to the method 400. For brevity, details are not described herein again.

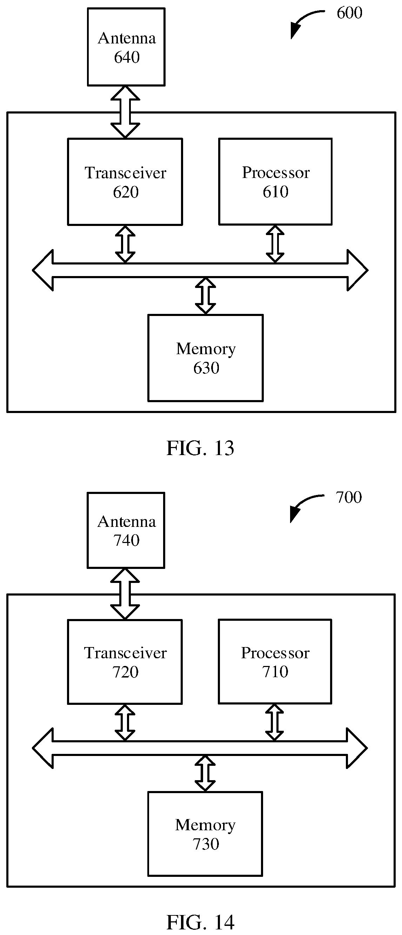

FIG. 13 is a schematic structural diagram of a relay node 600 according to an embodiment of this application. As shown in FIG. 13, the relay node 600 includes a processor 610 and a transceiver 620. Optionally, the relay node 600 further includes a memory 630. The processor 610, the transceiver 620, and the memory 630 communicate with each other through an internal connection path, to transfer a control signal and/or a data signal. The memory 630 is configured to store a computer program. The processor 610 is configured to invoke the computer program from the memory 630 and run the computer program, to control the transceiver 620 to receive and send a signal.

The processor 610 and the memory 630 may be combined into one processing apparatus 604. The processor 610 is configured to execute program code stored in the memory 630 to implement the foregoing functions. During specific implementation, the memory 630 may also be integrated into the processor 610, or may be independent of the processor 610. The relay node 600 may further include an antenna 640, configured to send, by using a radio signal, uplink data output by the transceiver 620.

Specifically, the relay node 600 may correspond to the relay node in the method 100 to the method 400 according to the embodiments of this application. The relay node 600 may include a module configured to perform the method performed by the relay node in the method 100 to the method 400. In addition, modules in the relay node 600 and the foregoing other operations and/or functions are respectively intended to implement corresponding procedures of the method 100 to the method 400 in FIG. 7 to FIG. 10. Specifically, the memory 630 is configured to store program code, so that when executing the program code, the processor 610 performs step 130 in the method 100, step 201 in the method 200, and step 301 in the method 300, and controls the transceiver 620 to perform step 110 and step 120 in the method 100. The transceiver unit 620 may be further configured to perform step 202 to step 2061 and step 209 and step 210 in the method 200. The transceiver unit 510 may be further configured to perform step 302 to step 3121, step 316, and step 3161 in the method 300. The transceiver unit 510 may be further configured to perform step 401 to step 4051, step 410, and step 4101 in the method 400. A specific process in which each module performs the foregoing corresponding step is described in detail in the method 100 to the method 400. For brevity, details are not described herein again.

The processor 610 may be configured to perform an action that is implemented inside the relay node and that is described in the foregoing method embodiment. The transceiver 620 may be configured to perform a transmitting or sending action that is from the relay node to the base station and that is described in the foregoing method embodiment. For details, refer to the descriptions in the foregoing method embodiment. Details are not described herein again.

The processor 610 and the memory 630 may be integrated into one processing apparatus. The processor 610 is configured to execute program code stored in the memory 630 to implement the foregoing functions. During specific implementation, the memory 630 may alternatively be integrated in the processor 610.

FIG. 14 is a schematic structural diagram of a base station 700 according to an embodiment of this application. As shown in FIG. 14, the base station 700 includes a processor 710 and a transceiver 720. Optionally, the base station 700 further includes a memory 730. The processor 710, the transceiver 720, and the memory 730 communicate with each other through an internal connection path, to transfer a control signal and/or a data signal. The memory 730 is configured to store a computer program. The processor 710 is configured to invoke the computer program from the memory 730 and run the computer program, to control the transceiver 720 to send and receive a signal.

The processor 710 and the memory 730 may be integrated into one processing apparatus. The processor 710 is configured to execute program code stored in the memory 730 to implement the foregoing functions. During specific implementation, the memory 730 may also be integrated into the processor 710, or may be independent of the processor 710.

The network device may further include an antenna 740, configured to send, by using a radio signal, downlink data or downlink control signaling output by the transceiver 720.

Specifically, the base station 700 may correspond to the base station in the method 100 to the method 400 according to the embodiments of this application. The base station 700 may include a module configured to perform a method performed by the base station in the method 100 to the method 400. In addition, modules in the apparatus 500 and the foregoing other operations and/or functions are respectively intended to implement corresponding procedures of the method 100 to the method 400 in FIG. 7 to FIG. 10. In addition, modules in the base station 700 and the foregoing other operations and/or functions are respectively intended to implement corresponding procedures of the method 100 to the method 400 in FIG. 7 to FIG. 10. Specifically, the memory 730 is configured to store program code, and control the transceiver 720 to perform step 2041, step 2051, step 2061, and step 207 to step 209 in the method 200 by using the antenna 740, step 3041, step 3051, step 3061, step 3091, step 3101, step 3111, step 3121, step 307, step 308, step 313 to step 315, and step 3161 in the method 300, and step 4031, step 4041, step 406 to step 409, and step 4101 in the method 400. A specific process in which each module performs the foregoing corresponding step is described in detail in the method 100 to the method 400. For brevity, details are not described herein again.

It should be understood that, in the embodiments of this application, the processor may be a central processing unit (central processing unit, CPU), or may be another general purpose processor, a digital signal processor (digital signal processor, DSP), an application-specific integrated circuit (application specific integrated circuit, ASIC), a field programmable gate array (field programmable gate array, FPGA) or another programmable logical device, a discrete gate or transistor logical device, a discrete hardware component, or the like. The general purpose processor may be a microprocessor, or the processor may be any conventional processor or the like.

It may be understood that the memory in the embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, random access memories (random access memory, RAM) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM).

According to the methods provided in the embodiments of this application, this application further provides a computer program product. The computer program product includes computer program code. When the computer program code is run on a computer, the computer is enabled to perform the methods in the embodiments shown in FIG. 7 to FIG. 11.

According to the methods provided in the embodiments of this application, this application further provides a computer-readable medium. The computer-readable medium stores program code. When the program code is run on a computer, the computer is enabled to perform the methods in the embodiments shown in FIG. 7 to FIG. 11.

According to the methods provided in the embodiments of this application, this application further provides a system. The system includes the foregoing network device and one or more terminal devices. All or some of the foregoing embodiments may be implemented by using software, hardware, firmware, or any combination thereof. When software is used to implement the embodiments, the foregoing embodiments may be implemented completely or partially in a form of a computer program product. The computer program product includes one or more computer instructions. When the computer program instructions are loaded or executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

## Claims

1. A cell establishment method, comprising:
receiving (110), by a relay node, first downlink information sent by a base station, wherein the first downlink information comprises cell configuration information of a first cell, and the first cell is a cell of the base station; and
establishing (120), by the relay node, a second cell based on the cell configuration information, wherein the second cell serves as extended coverage of the first cell, and a cell global identifier and/or a physical cell identifier of the second cell are/is the same as those/that of the first cell;
wherein the method further comprises:
receiving, by the relay node, first radio resource control, RRC, information sent by a terminal device;
generating, by the relay node, second RRC information, wherein the second RRC information comprises information elements of the first RRC information;
wherein the generating, by the relay node, second RRC information comprises:
parsing, by the relay node, content of the first RRC information by using a function of proxy RRC, and including all or some of the information elements of the first RRC information in an RRC container, wherein the proxy RRC is an RRC corresponding to the relay node; and
sending, by the relay node, the second RRC information to the base station.

2. The method according to claim 1, wherein the relay node communicates with the base station through an air interface.

3. The method according to claim 1 or 2, wherein the first RRC information comprises at least any one of the following:
RRC connection establishment request information. RRC connection establishment complete information, RRC connection configuration complete information, RRC connection re-establishment request information, RRC connection re-establishment complete information, RRC connection reconfiguration complete information, RRC resume request information, RRC resume request complete information, RRC early data transmission request information, and an uplink information transmission message.

4. The method according to any one of claims 1 to 3, wherein the second RRC information comprises an identifier of the terminal device, and the identifier comprises at least any one of the following:
a serving temporary mobile subscriber identity, S-TMSI, a cell radio network temporary identifier, C-RNTI, a random number, and a resume identifier.

5. A cell establishment method, comprising:
determining, by a base station, cell configuration information of a first cell, wherein the first cell is a cell of the base station; and
sending (110), by the base station, first downlink information to a relay node, wherein the first downlink information comprises the cell configuration information, the cell configuration information is used by the relay node to establish (120) a second cell, the second cell serves as extended coverage of the first cell, and a cell global identifier and/or a physical cell identifier of the second cell are/is the same as those/that of the first cell;
wherein the method further comprises:
receiving, by the base station, first radio resource control, RRC, information sent by the relay node, wherein the first RRC information is information sent by a terminal device to the relay node;
wherein the first RRC information is carried in an RRC container.

6. The method according to claim 5, wherein the base station communicates with the relay node through an air interface.

7. The method according to claim 5 or claim 6, wherein the method further comprises:
sending, by the base station, second downlink information to the relay node, wherein the second downlink information comprises third RRC information, and the third RRC information is information sent by the base station to the terminal device.

8. The method according to any one of claims 5 to 7, wherein the third RRC information is carried in an RRC container.

9. The method according to any one of claims 5 to 8, wherein the first RRC information and/or the third RRC information comprise/comprises an identifier of the terminal device, and the identifier comprises at least any one of the following:
a serving temporary mobile subscriber identity, S-TMSI, a cell radio network temporary identifier, C-RNTI, a random number, and a resume identifier.

10. The method according to any one of claims 5 to 9, wherein the first RRC information comprises at least any one of the following:
RRC connection establishment request information. RRC connection establishment complete information, RRC connection configuration complete information, RRC connection re-establishment request information, RRC connection re-establishment complete information, RRC connection reconfiguration complete information, RRC resume request information, RRC resume request complete information, RRC early data transmission request information, and an uplink information transmission message.

11. A cell establishment apparatus, comprising a processor and an interface component, wherein
the processor is configured to read and execute an instruction in a memory by using an interface component, to implement the method according to any one of claims 1 to 4.

12. A cell establishment apparatus, comprising a processor and an interface component, wherein
the processor is configured to read and execute an instruction in a memory by using an interface component, to implement the method according to any one of claims 5 to 10.

## Patentansprüche

1. Zelleinrichtungsverfahren, umfassend:
Empfangen (110), durch einen Relaisknoten, erster Downlink-Informationen, die durch eine Basisstation gesendet werden, wobei die ersten Downlink-Informationen Zellkonfigurationsinformationen einer ersten Zelle umfassen und die erste Zelle eine Zelle der Basisstation ist; und
Einrichten (120), durch den Relaisknoten, einer zweiten Zelle basierend auf den Zellkonfigurationsinformationen, wobei die zweite Zelle als eine erweiterte Abdeckung der ersten Zelle dient und eine globale Zellkennung und/oder eine physische Zellkennung der zweiten Zelle die gleiche wie jene der ersten Zelle ist/sind;
wobei das Verfahren ferner Folgendes umfasst:
Empfangen, durch den Relaisknoten, erster Funkressourcensteuerungsinformationen, RRC-Informationen, die durch eine Endgerätevorrichtung gesendet werden;
Erzeugen, durch den Relaisknoten, zweiter RRC-Informationen, wobei die zweiten RRC-Informationen Informationselemente der ersten RRC-Informationen umfassen;
wobei das Erzeugen, durch den Relaisknoten, zweiter RRC-Informationen Folgendes umfasst:
Parsen, durch den Relaisknoten, eines Inhalts der ersten RRC-Informationen unter Verwendung einer Funktion zur Proxy-RRC und Beinhalten aller oder einiger Informationselemente der ersten RRC-Informationen in einem RRC-Behälter, wobei die Proxy-RRC eine RRC ist, die dem Relaisknoten entspricht; und
Senden, durch den Relaisknoten, der zweiten RRC-Information an die Basisstation.

2. Verfahren nach Anspruch 1, wobei der Relaisknoten über eine Luftschnittstelle mit der Basisstation kommuniziert.

3. Verfahren nach Anspruch 1 oder 2, wobei die ersten RRC-Informationen mindestens eines der Folgenden umfassen:
Informationen zur Anforderung einer RRC-Verbindungseinrichtung, Informationen zum Abschluss einer RRC-Verbindungseinrichtung, Informationen zum Abschluss einer RRC-Verbindungskonfiguration, Informationen zur Anforderung einer RRC-Verbindungsneueinrichtung, Informationen zum Abschluss einer RRC-Verbindungsneueinrichtung, Informationen zum Abschluss einer RRC-Verbindungsneukonfiguration, Informationen zur Anforderung einer RRC-Wiederaufnahme, Informationen zum Abschluss einer RRC-Wiederaufnahmeanforderung, Informationen zur Anforderung einer frühen RRC-Datenübertragung und eine Uplink-Informationsübertragungsnachricht.

4. Verfahren nach einem der Ansprüche 1 bis 3, wobei die zweiten RRC-Informationen eine Kennung der Endgerätevorrichtung umfassen und die Kennung mindestens eine der Folgenden umfasst: eine dienende temporäre mobile Abonnentenkennung, S-TMSI, eine temporäre Zellfunknetzkennung, C-RNTI, eine Zufallszahl und eine Wiederaufnahmekennung.

5. Zelleinrichtungsverfahren, umfassend:
Bestimmen, durch eine Basisstation, von Zellkonfigurationsinformationen einer ersten Zelle, wobei die erste Zelle eine Zelle der Basisstation ist; und
Senden (110), durch die Basisstation, erster Downlink-Informationen an einen Relaisknoten, wobei die ersten Downlink-Informationen die Zellkonfigurationsinformationen umfassen, die Zellkonfigurationsinformationen durch den Relaisknoten dazu verwendet werden, eine zweite Zelle einzurichten (120), die zweite Zelle als eine erweiterte Abdeckung der ersten Zelle dient und eine globale Zellkennung und/oder eine physische Zellkennung der zweiten Zelle die gleiche wie jene der ersten Zelle ist/sind;
wobei das Verfahren ferner Folgendes umfasst:
Empfangen, durch die Basisstation, erster Funkressourcensteuerungsinformationen, RRC-Informationen, die durch den Relaisknoten gesendet werden, wobei die ersten RRC-Informationen Informationen sind, die durch eine Endgerätevorrichtung an den Relaisknoten gesendet werden;
wobei die ersten RRC-Informationen in einem RRC-Behälter enthalten sind.

6. Verfahren nach Anspruch 5, wobei die Basisstation über eine Luftschnittstelle mit dem Relaisknoten kommuniziert.

7. Verfahren nach Anspruch 5 oder Anspruch 6, wobei das Verfahren ferner Folgendes umfasst:
Senden, durch die Basisstation, zweiter Downlink-Informationen an den Relaisknoten, wobei die zweiten Downlink-Informationen dritte RRC-Informationen umfassen und die dritten RRC-Informationen Informationen sind, die durch die Basisstation an die Endgerätevorrichtung gesendet werden.

8. Verfahren nach einem der Ansprüche 5 bis 7, wobei die dritten RRC-Informationen in einem RRC-Behälter enthalten sind.

9. Verfahren nach einem der Ansprüche 5 bis 8, wobei die ersten RRC-Informationen und/oder die dritten RRC-Informationen eine Kennung der Endgerätevorrichtung umfassen/umfasst und die Kennung mindestens eine der Folgenden umfasst:
eine dienende temporäre mobile Abonnentenkennung, S-TMSI, eine temporäre Zellfunknetzkennung, C-RNTI, eine Zufallszahl und eine Wiederaufnahmekennung.

10. Verfahren nach einem der Ansprüche 5 bis 9, wobei die ersten RRC-Informationen mindestens eines der Folgenden umfassen: Informationen zur Anforderung einer RRC-Verbindungseinrichtung, Informationen zum Abschluss einer RRC-Verbindungseinrichtung, Informationen zum Abschluss einer RRC-Verbindungskonfiguration, Informationen zur Anforderung einer RRC-Verbindungsneueinrichtung, Informationen zum Abschluss einer RRC-Verbindungsneueinrichtung, Informationen zum Abschluss einer RRC-Verbindungsneukonfiguration, Informationen zur Anforderung einer RRC-Wiederaufnahme, Informationen zum Abschluss einer RRC-Wiederaufnahmeanforderung, Informationen zur Anforderung einer frühen RRC-Datenübertragung und eine Uplink-Informationsübertragungsnachricht.

11. Zelleinrichtungsgerät, umfassend einen Prozessor und eine Schnittstellenkomponente, wobei
der Prozessor dazu konfiguriert ist, eine Anweisung in einem Speicher unter Verwendung einer Schnittstellenkomponente zu lesen und auszuführen, um das Verfahren nach einem der Ansprüche 1 bis 4 umzusetzen.

12. Zelleinrichtungsgerät, umfassend einen Prozessor und eine Schnittstellenkomponente, wobei
der Prozessor dazu konfiguriert ist, eine Anweisung in einem Speicher unter Verwendung einer Schnittstellenkomponente zu lesen und auszuführen, um das Verfahren nach einem der Ansprüche 5 bis 10 umzusetzen.

## Revendications

1. Procédé d'établissement de cellule, comprenant :
la réception (110), par un nœud relais, de premières informations de liaison descendante envoyées par une station de base, dans lequel les premières informations de liaison descendante comprennent des informations de configuration de cellule d'une première cellule, et la première cellule est une cellule de la station de base ; et
l'établissement (120), par le nœud relais, d'une seconde cellule sur la base des informations de configuration de cellule, dans lequel la seconde cellule sert de couverture étendue de la première cellule, et un identifiant global de cellule et/ou un identifiant physique de cellule de la seconde cellule sont les mêmes que ceux de la première cellule ;
dans lequel le procédé comprend également :
la réception, par le nœud relais, de premières informations de commande de ressources radio, RRC, envoyées par un dispositif terminal ;
la génération, par le nœud relais, de deuxièmes informations RRC, dans lequel les deuxièmes informations RRC comprennent des éléments d'information des premières informations RRC ;
dans lequel la génération, par le nœud relais, de deuxièmes informations RRC comprend :
l'analyse, par le nœud relais, du contenu des premières informations RRC à l'aide d'une fonction de proxy RRC, et l'inclusion de tout ou partie des éléments d'information des premières informations RRC dans un conteneur RRC, dans lequel le proxy RRC est un RRC correspondant au nœud relais ; et
l'envoi, par le nœud relais, des deuxièmes informations RRC à la station de base.

2. Procédé selon la revendication 1, dans lequel le nœud relais communique avec la station de base par l'intermédiaire d'une interface radio.

3. Procédé selon la revendication 1 ou 2, dans lequel les premières informations RRC comprennent au moins l'un quelconque des éléments suivants :
des informations de demande d'établissement de connexion RRC, des informations complètes d'établissement de connexion RRC, des informations complètes de configuration de connexion RRC, des informations de demande de rétablissement de connexion RRC, des informations complètes de rétablissement de connexion RRC, des informations complètes de reconfiguration de connexion RRC, des informations de demande de reprise RRC, des informations complètes de demande de reprise RRC, des informations de demande de transmission de données précoce RRC, et un message de transmission d'informations de liaison montante.

4. Procédé selon l'une quelconque des revendications 1 à 3, dans lequel les deuxièmes informations RRC comprennent un identifiant du dispositif terminal, et l'identifiant comprend au moins l'un des éléments suivants :
une identité temporaire d'abonné mobile de service, S-TMSI, un identifiant temporaire de réseau radio cellulaire, C-RNTI, un numéro aléatoire, et un identifiant de reprise.

5. Procédé d'établissement de cellule, comprenant :
la détermination, par une station de base, d'informations de configuration de cellule d'une première cellule, dans lequel la première cellule est une cellule de la station de base ; et
l'envoi (110), par la station de base, de premières informations de liaison descendante à un nœud relais, dans lequel les premières informations de liaison descendante comprennent les informations de configuration de cellule, les informations de configuration de cellule sont utilisées par le nœud relais pour établir (120) une seconde cellule, la seconde cellule sert de couverture étendue de la première cellule, et un identifiant global de cellule et/ou un identifiant physique de cellule de la seconde cellule sont les mêmes que ceux de la première cellule ;
dans lequel le procédé comprend également :
la réception par la station de base, de premières informations de commande de ressources radio, RRC, envoyées par le nœud relais, dans lequel les premières informations RRC sont des informations envoyées par un dispositif terminal au nœud relais ;
dans lequel les premières informations RRC sont transportées dans un conteneur RRC.

6. Procédé selon la revendication 5, dans lequel la station de base communique avec le nœud relais par l'intermédiaire d'une interface radio.

7. Procédé selon la revendication 5 ou 6, dans lequel le procédé comprend également :
l'envoi, par la station de base, de secondes informations de liaison descendante au nœud relais, dans lequel les secondes informations de liaison descendante comprennent de troisièmes informations RRC, et les troisièmes informations RRC sont des informations envoyées par la station de base au dispositif terminal.

8. Procédé selon l'une quelconque des revendications 5 à 7, dans lequel les troisièmes informations RRC sont transportées dans un conteneur RRC.

9. Procédé selon l'une quelconque des revendications 5 à 8, dans lequel les premières informations RRC et/ou les troisièmes informations RRC comprennent un identifiant du dispositif terminal, et l'identifiant comprend au moins l'un quelconque des éléments suivants :
une identité temporaire d'abonné mobile de service, S-TMSI, un identifiant temporaire de réseau radio cellulaire, C-RNTI, un numéro aléatoire, et un identifiant de reprise.

10. Procédé selon l'une quelconque des revendications 5 à 9, dans lequel les premières informations RRC comprennent au moins l'un quelconque des éléments suivants :
des informations de demande d'établissement de connexion RRC, des informations complètes d'établissement de connexion RRC, des informations complètes de configuration de connexion RRC, des informations de demande de rétablissement de connexion RRC, des informations complètes de rétablissement de connexion RRC, des informations complètes de reconfiguration de connexion RRC, des informations de demande de reprise RRC, des informations complètes de demande de reprise RRC, des informations de demande de transmission de données précoce RRC, et un message de transmission d'informations de liaison montante.

11. Appareil d'établissement de cellule, comprenant un processeur et un composant d'interface, dans lequel
le processeur est configuré pour lire et exécuter une instruction dans une mémoire à l'aide d'un composant d'interface, pour mettre en œuvre le procédé selon l'une quelconque des revendications 1 à 4.

12. Appareil d'établissement de cellule, comprenant un processeur et un composant d'interface, dans lequel
le processeur est configuré pour lire et exécuter une instruction dans une mémoire à l'aide d'un composant d'interface, pour mettre en œuvre le procédé selon l'une quelconque des revendications 5 à 10.
